# EUROPÄISCHE PATENTSCHRIFT

(11) **EP 3 292 387 B1**
(45) Veröffentlichungstag und Bekanntmachung des Hinweises auf die Patenterteilung: **13.01.2021**
(21) Anmeldenummer: 16724845.9
(22) Anmeldetag: 09.05.2016
(51) Int. Cl.: G01M 3/22

(54) **VERFAHREN UND VORRICHTUNG FÜR EINEN INTEGRITÄTSTEST EINES TESTBEHÄLTERS**
METHOD AND APPARATUS FOR AN INTEGRITY TEST OF A TEST CONTAINER
PROCÉDÉ ET DISPOSITIF POUR UN TEST D'INTÉGRITÉ D'UN RÉCIPIENT DE TEST

(30) Priorität: 07.05.2015 DE 102015005833
(43) Veröffentlichungstag der Anmeldung: 14.03.2018
(73) Patentinhaber: Sartorius Stedim Biotech GmbH, 37079 Göttingen (DE)
(72) Erfinder: HOGREVE, Marc, 37139 Adelebsen (DE)
(74) Vertreter: Balsters, Robert
(86) Internationale Anmeldenummer: PCT/EP2016/000754
(87) Internationale Veröffentlichungsnummer: WO 2016/177478

(56) Entgegenhaltungen:
- WO-A1-98/25120
- WO-A1-2006/032591
- WO-A1-2011/084096
- DE-A1-102008 063 776
- DE-A1-102013 000 086
- US-A- 5 345 814
- US-A- 5 422 240
- US-A- 5 499 529
- US-A- 5 798 696
- US-A1- 2009 248 324
- US-B1- 6 640 615

## Beschreibung

Die Erfindung betrifft ein Verfahren und die Verwendung einer Vorrichtung zur Durchführung eines Integritätstests an einem flexiblen Testbehälter.

Hermetisch verschlossene, flexible Behälter, wie z.B. Plastikbeutel, werden insbesondere in der Bioprozessierung häufig verwendet. Bei vielen Anwendungen werden flexible Behälter zur Aufnahme von Zellkulturlösungen, Blutkonserven, Lösungen für Bioreaktoren, usw. verwendet. Insbesondere in der Bioprozessierung werden häufig sterilisierte Behälter verwendet, die während der Nutzung ihre Sterilität behalten sollen.

Aufgrund der zunehmenden Kritizität der Applikationen, in denen flexible Behälter bzw. Beutel, insbesondere sogenannte *"single-use Bags"* verwendet werden, nimmt auch die Anforderung an die Sensitivität der Dichtheitsprüfung solcher Behälter bzw. Beutel zu. Demensprechend werden die entsprechenden Standards zur Durchführung von Dichtigkeitstests oftmals geändert und überarbeitet. Typischerweise ist der Standard dabei oftmals an die sensitivste, bekannte Testmethode angelehnt.

Um einen beschädigten und somit für einen sterilen Einsatz untauglichen Behälter erkennen zu können, wird deshalb häufig der flexible Behälter vor der Verwendung einem Lecktest und/oder einem Integritätstest ausgesetzt bzw. unterzogen. Dabei wird ein zu überprüfender, flexibler Behälter (im Folgenden auch Testbehälter bezeichnet) mit einem Prüffluid, insbesondere einem Prüfgas, befüllt und in einem verschließbaren Prüfbehälter angeordnet. In dem Prüfbehälter wird dabei häufig ein geringerer Druck als im Testbehälter, vorzugsweise ein Vakuum, erzeugt. Weist der Testbehälter ein Leck auf, so tritt das Prüffluid aufgrund des Druckunterschieds zwischen dem Testbehälter und dem Prüfbehälter durch das Leck aus dem Testbehälter aus und kann in dem Prüfbehälter detektiert werden.

Wird im Prüfbehälter kein Prüffluid detektiert, so besteht der Testbehälter den Lecktest und/oder Integritätstest. Wird im Prüfbehälter aufgrund eines Lecks Prüffluid detektiert, so ist der Testbehälter ungeeignet zur Verwendung als steriler Behälter. Steigende Anforderungen an die Dichtigkeit gehen insbesondere einher mit der Anforderung, kleinere Lecks noch detektieren zu können. Es ist daher unter Umständen erforderlich oder hilfreich, sogar geringste Prüffluidmengen noch detektieren zu können und die durch Lecks hervorgerufene Detektion von Prüffluid noch zuverlässig von einem Messhintergrund oder Rauschen unterscheiden zu können.

Gerade im Falle besonders hoher Anforderungen an die Sensitivität und Zuverlässigkeit von Lecktests hat sich die Verwendung von Helium als Prüfgas besonders bewährt. Einerseits dringt Helium selbst durch sehr kleine Lecks noch zuverlässig hindurch. Andererseits kann Helium mit einfachen Mitteln sehr zuverlässig detektiert und von anderen Hintergrundgasen unterschieden werden.

WO 2011/084096 A1 beschreibt eine Vorrichtung zur Dichtheitsprüfung von Schläuchen. Dabei wird ein begrenzter Längenabschnitt des Schlauches an beiden Enden zwischen jeweils ein Rollenpaar geklemmt und das Volumen des Schlauches zwischen den beiden Rollenpaaren mit einer Flüssigkeit oder einem Gas unter Druck befüllt. Der befüllte Abschnitt wird sodann mittels der Rollenpaare über die gesamte Schlauchlänge bewegt, wobei Leckagen oder Löcher detektiert werden. Die Detektion erfolgt beispielsweise über eine Kamera, über Drucksensoren oder über ein Mikrophon.

US 2009/248324 A1 beschreibt eine Vorrichtung zum Testen einer Druckbeständigkeit von Feuerwehrschläuchen, wobei die Feuerwehrschläuche für zumindest drei Minuten einem höheren Druck als dem regulären Betriebsdruck ausgesetzt werden. Dabei kann für jeden der zu testenden Schläuche ein Drucksensor vorgesehen sein.

US 5,798,696 A beschreibt eine Vorrichtung zur Detektion von Leckagen in pneumatischen Schläuchen. Dabei werden die Schläuche mit CO₂ befüllt und eine CO₂ Konzentration mittels eines Gasdetektors außerhalb des Schlauches gemessen. CO₂ wird als Prüfgas deshalb vorgeschlagen, weil es als reaktionsträge, sicher und umweltverträglich angesehen wird.

WO 98/25120 A1 beschreibt eine Vorrichtung und ein Verfahren zur zerstörungsfreien Dichtheitsprüfung einer verschlossenen Verpackung, welche einen gaspermeablen Teil und einen nicht-gaspermeablen Teil aufweist. Insbesondere soll die Dichtheit einer nicht-gaspermeablen Plastikschale und deren Verbindung mit einer gaspermeablen Membran getestet werden und insbesondere "gaspermeable Schwachstellen", wie etwa Löcher (pinholes) aufgespürt werden. Als Prüfgase werden He, Ne, Ar, Kr, Xe, CO₂ oder Halogenkohlenwasserstoffe vorgeschlagen, wobei ein Helium-Luft-Gemisch bevorzugt wird, da die Helium-Konzentration in der Umgebungsluft sehr klein ist.

DE 10 2013 000086 A1 beschreibt eine Vorrichtung und ein Verfahren zur Dichtheitsprüfung einer flexiblen Verpackung, welche insbesondere aus einer gasdichten Folie gebildet wird. Dabei wird in der Verpackung ein Überdruck mittels eines Testgases bereitgestellt, wobei als Testgas vorzugsweise ein Schutzgas aus CO₂ und Stickstoff verwendet wird. Außerhalb des Testbehälters wird mittels eines Gassensors, insbesondere mittels eines CO₂-Sensors, die Konzentration des Prüfgases gemessen.

US 5,422,240 A beschreibt ein Verfahren zum Testen von Kondomen hinsichtlich einer Durchdringbarkeit für Viren. Dabei werden die Kondome mit einer Flüssigkeit, welche Viren enthält, auf eine Größe aufgepumpt, welche der Größe in einer Gebrauchssituation entspricht. Mittels einer Sammelflüssigkeit außerhalb des Kondoms werden eventuell durch das Kondom hindurch gedrungene Viren ermittelt, wobei anschließend in der Sammelflüssigkeit enthaltene Viren detektiert werden.

DE 10 2008 063776 A1 beschreibt eine Vorrichtung und ein Verfahren zur Dichtheitsprüfung von flexiblen Sterilbehältern, wobei in einer Prüfkammer der zu testende Sterilbehälter mit Prüfgas beaufschlagt wird, und der Prüfgasgehalt in der Prüfkammer gemessen wird. Als Prüfgas wird dabei bevorzugt Helium vorgeschlagen, da Helium bereits durch kleinste Leckagen hindurchgelangen kann.

WO 2006/032591 A1 beschreibt ein Verfahren und eine Vorrichtung, zur Leckprüfung mit einem Partialdrucksensor. Als Prüfgase werden Edelgase, insbesondere Helium, oder Wasserstoff vorgeschlagen. Helium eignet sich dabei besonders, da es ein leichtes Gas ist, das selbst durch feinste Lecks austritt. Hierbei werden die Nachteile einer Verwendung von SF₆ als Prüfgas betont.

US 6,640,615 B1 beschreibt ein System zur Messung von Gas-Transmissionseigenschaften von Paketen und Materialien bezüglich eines Testgases und zur Interpolation von Gas-Transmissionseigenschaften eines anderen Gases, welches von dem Testgas unterschiedlich ist, basierend auf den Gas-Transmissionseigenschaften des Testgases.

US 5,345,814 A beschreibt eine Vorrichtung und ein Verfahren zur Verifizierung der Integrität von Wänden und Dichtungen eines abgedichteten Behälters mittels eines Gases mit geringem Molekulargewicht.

US 5,499,529 beschreibt ein Verfahren zur Detektion kleiner Löcher in Lebensmittelverpackungen und Verpackungen anderer Konsumerprodukte mittels eines Gase mit hohem Molekulargewicht.

Der Erfindung liegt angesichts der steigenden Anforderungen an Integritätstests in sehr vielen Technologiebereichen, insbesondere der Bioprozessierung, die Aufgabe zugrunde, die Zuverlässigkeit der Detektion noch kleinerer Lecks selbst in größeren, flexiblen Testbehältern noch weiter zu verbessern.

Die Aufgabe wird durch die Gegenstände der unabhängigen Ansprüche gelöst. Die abhängigen Ansprüche betreffen bevorzugte Ausführungsformen.

In einem ersten Aspekt betrifft die Erfindung ein Verfahren zur Durchführung eines Integritätstests an einem zumindest ein flexibles Hüllenmaterial umfassenden Beutel zur Bioprozessierung, wobei das Hüllenmaterial einen Kunststoff umfasst. Das Verfahren umfasst dabei die Schritte:
- Einfüllen eines Prüfgases in den Beutel; und
- Detektieren von unmittelbar außerhalb des Beutels vorhandenem Prüfgas;
wobei das Prüffluid derart ausgebildet ist, dass die Permeationsrate des Prüfgases durch
unversehrtes Hüllenmaterial des Beutels nicht größer als 1·10⁻⁶ mbar·m/(s·bar) ist, wobei das Fassungsvermögen des flexiblen Beutels zumindest etwa 10 I beträgt, und wobei das zumindest eine Hüllenmaterial eine Dicke von nicht mehr als 2 mm aufweist.

Mit dem erfindungsgemäßen Verfahren kann die Integrität des Beutels (im folgenden auch einfach als Testbehälter bezeichnet) überprüft werden, insbesondere kann ein Leck des Testbehälters, etwa in dessen Hüllenmaterial, detektiert werden. Als Testbehälter wird ein Testbehälter mit flexiblen Wänden untersucht, z.B. ein Plastikbeutel. Der Testbehälter kann an zumindest einer Stelle eine Öffnung aufweisen, über die das Prüffluid in den Testbehälter eingebracht werden kann. Dazu kann der Testbehälter an seiner Öffnung eine Kopplung zum Ankoppeln an eine Zuleitung aufweisen.

Das erfindungsgemäße Verfahren weist dabei den technischen Vorteil auf, dass ein Leck im Testbehälter mit besonders großer Genauigkeit und/oder besonders zuverlässig detektiert werden kann. Dieser erfindungsgemäße Vorteil ist insbesondere bei großen Testbehältern, etwa bei flexiblen Plastikbeuteln mit einem Fassungsvermögen von mehreren Litern, vorzugsweise von mehreren zehn Litern, besonders bevorzugt von mehr als einhundert Litern, besonders stark ausgeprägt.

Ein weiterer Vorteil des erfindungsgemäßen Verfahrens ist, dass für die Durchführung des Integritätstests und/oder für die Detektion eines Lecks in dem Testbehälter ein längerer Zeitraum zur Verfügung stehen kann als bei herkömmlichen Verfahren. Dieser erfindungsgemäße Vorteil ermöglicht es, Beutel mit einem großen Fassungsvermögen besonders effizient und zuverlässig zu prüfen, da vorzugsweise mehr Zeit für das Aufblasen des Beutels und/oder die Entfaltung des Beutels und/oder für das Erreichen eines stationären Zustands des mit Prüffluid befüllten Beutels zur Verfügung steht als mit einem herkömmlichen Verfahren. Das erfindungsgemäße Verfahren bietet somit den Vorteil, dass es auch ein zuverlässiges Verfahren zur Durchführung eines Integritätstest für sehr große Beutel bereitstellt.

Entgegen den Erwartungen eines Fachmanns wurde im Rahmen der Erfindung erkannt, dass das erfindungsgemäße Verfahren ferner den Vorteil bietet, dass auch besonders kleine Lecks im Testbehälter detektiert werden können. Herkömmlicherweise wird zur Detektion von besonders kleinen Lecks oft He als Prüffluid verwendet. He ist zur Durchführung von Lecktests insbesondere deshalb weit verbreitet, weil für die Detektion bzw. für den Nachweis von He äußerst sensitive Sensoriksysteme zur Verfügung stehen, welche die Detektion bzw. den Nachweis bereits von sehr geringen Konzentrationen bzw. Mengen von He erlauben. Dies wird ferner dadurch unterstützt, dass die natürlich in der Atmosphäre vorhandene Konzentration von He sehr gering ist, weshalb eine Detektion von He mit einem sehr geringen Hintergrundwert möglich ist. Außerdem diffundiert Helium sehr schnell, weshalb oft eine sehr kurze Reaktionszeit eines Detektionssystems zu erwarten ist. Zudem zeichnet sich He dadurch als vorteilhaft aus, dass es als Edelgas inert ist und somit keine Gefahr einer chemischen oder physikalischen Wechselwirkung mit dem Testbehälter droht und keine aufwendigen Vorkehrungen für die Verwendung von He getroffen werden müssen, da von He keine Gefahr für den Testbehälter, Mensch oder Umwelt ausgeht. Aus den genannten Gründen und Vorteilen ist He ein sehr weit verbreitetes Gas für die Durchführung von Lecktests.

Trotz der zahlreichen Vorteile der Verwendung von He bei herkömmlichen Lecktests wurde im Rahmen der Erfindung erkannt, dass besonders kleine Lecks gerade dann effizient detektiert werden können, wenn die Permeation von Prüffluid durch unversehrtes Hüllenmaterial einen Wert von 1.10⁻⁶ mbar·m/(s·bar) nicht übersteigt. Dies kann insbesondere dann der Fall sein, wenn das Prüffluid beispielsweise große Atome und/oder Moleküle umfasst, welche deutlich größer als He Atome sind und somit herkömmlicherweise als weniger gut geeignet für die Detektierung von kleinen Lecks erachtet werden.

Entgegen den Erwartungen eines Fachmanns entsteht dieser Vorteil jedoch dadurch, dass durch das erfindungsgemäße Verfahren störende Einflüsse auf das Messsignal aufgrund von Permeation verringert oder gar ganz vermieden werden können.

Ferner bietet das erfindungsgemäße Verfahren den Vorteil, dass genauer zwischen unterschiedlichen Leckgrößen bzw. Leckdurchmessern unterschieden werden kann und somit eine Charakterisierung des Testbehälters zuverlässiger erfolgen kann. Darüber hinaus kann durch die Reduktion von störenden Einflüssen aufgrund von Permeation im erfindungsgemäßen Verfahren auch eine schnellere und effizientere Messung bzw. Prüfung ermöglicht werden, da beispielsweise auf eine große Anzahl von Messungen an ein und demselben Testbehälter und auf eine Mittelwertbildung verzichtet werden kann, während trotzdem eine ausreichende Sensitivität erreicht werden kann.

Als Prüffluid können im Allgemeinen Gase und/oder Flüssigkeiten dienen. Die erfindungsgemäß verwendeten Gase haben dabei den Vorteil, dass damit die Befüllung des Testbehälters und auch die Detektion oftmals schneller erfolgen kann als mit Flüssigkeiten. Vorzugsweise werden reaktionsträge und/oder ungiftige Gase verwendet, um Schäden an dem Testbehälter und/oder der Umwelt zu vermeiden. Das Prüffluid kann insbesondere als ein Prüfgas ausgebildet sein, das nicht oder nur in sehr geringer Form im normalen Luftgemisch vorkommt. Dadurch wird vermieden, dass durch die Detektion von Restluft im Prüfbehälter fälschlicherweise ein Leck des Testbehälters vermutet wird.

Das Detektieren des Prüffluids unmittelbar außerhalb des Testbehälters kann dabei in einem Prüfbehälter erfolgen, wobei der Testbehälter zumindest teilweise in dem Prüfbehälter angebracht ist. Das Detektieren des Prüffluids erfolgt dabei vorzugsweise außerhalb des Testbehälters jedoch innerhalb des Prüfbehälters. Weist der Testbehälter ein Leck auf, kann dabei vorzugsweise Prüffluid von dem befüllten Testbehälter in den Prüfbehälter eindringen und dort detektiert werden. Dringt kein Prüffluid von dem Testbehälter in den Prüfbehälter ein, ist vorzugsweise im Wesentlichen kein Prüffluid im Prüfbehälter vorhanden. "Im Wesentlichen kein Prüffluid" bedeutet dabei, dass eine Hintergrundkonzentration von Prüffluid im Prüfbehälter vorhanden sein kann, welche bei der Detektion des Prüffluids als eine Hintergrundleckrate in Erscheinung tritt, welche aber die Aussagekraft der Detektion des Prüffluids bzw. der Messung nicht erheblich schmälert.

Vorzugsweise ist ein Druckunterschied von Prüffluid zwischen dem Innenraum und dem Außenraum des Testbehälters eine treibende Kraft, welche im Falle eines Lecks in dem Testbehälter Prüffluid aus dem Testbehälter heraus treibt, wo es vorzugsweise detektiert werden kann.

Die Permeationsrate bezeichnet dabei die Rate von Permeation des Prüffluids durch unversehrtes Hüllenmaterial, d.h. die Rate, mit welcher Prüffluid durch unversehrtes Hüllenmaterial hindurch permeieren bzw. diffundieren kann. Eine Permeationsrate von 1·10⁻⁶ mbar·m/(s·bar) entspricht dabei beispielsweise einer Prüffluidmenge aufgrund von Permeation von 1.10⁻⁶ mbar·m³ pro Sekunde, pro 1 m²·Kontaktfläche zwischen Hüllenmaterial und Prüffluid und bei 1 bar Druckunterschied.

Die Permeation von Prüffluid durch unversehrtes Hüllenmaterial bezeichnet dabei die Druchdringung des Hüllenmaterials des Testbehälters von Prüffluid an Stellen des Testbehälters, welche kein Leck aufweisen. Beispielsweise kommt die Permeation dadurch zustande, dass Prüffluidteilchen, wie etwa Atome oder Moleküle, durch das Hüllenmaterial hindurchdiffundieren. Im Rahmen der Erfindung wurde erkannt, dass die Permeation, welche von der Kombination des Hüllenmaterials und des Prüffluids abhängt, in der Praxis die Messzeit, innerhalb derer eine deutliche Unterscheidung zwischen einer Detektion von Prüffluid außerhalb der Testbehälters aufgrund eines Lecks einerseits und aufgrund von Diffusion durch intaktes Hüllenmaterial andererseits möglich ist, derart begrenzt, dass insbesondere für größere Testbehälter die Detektion von Lecks mit einer Größe unterhalb einer Auflösungsgrenze mit nur einem einzigem Messzyklus nicht mehr zuverlässig möglich ist. Durch das erfindungsgemäße Verfahren wird es hingegen möglich, die Messzeit deutlich zu verlängern, ohne dass der Beitrag der Permeation an der Detektion des Prüffluids den Beitrag eines kleinen Lecks überdeckt. Somit können selbst kleinere Lecks wesentlich zuverlässiger detektiert werden.

Beispielsweise können unterschiedliche Prüffluide unterschiedliche Permeationseigenschaften, wie etwa Permeationsgeschwindigkeiten und/oder -raten, bei ein und demselben Hüllenmaterial aufweisen. In gleicher Weise kann ein und dasselbe Prüffluid unterschiedliche Permeationseigenschaften bei unterschiedlichen Hüllenmaterialien aufweisen. Beispielsweise können dabei die Dicke und/oder das Material und/oder die Beschaffenheit und/oder die Oberflächenstruktur des Hüllenmaterials einen Einfluss auf die Permeation eines und/oder unterschiedlicher Prüffluide haben.

Im Rahmen der Erfindung wurde erkannt, dass ein Verfahren zur Durchführung eines Integritätstests besonders effizient ist, wenn die Permeation des verwendeten Prüffluids durch das Hüllenmaterial des zu prüfenden Testbehälters einen Wert von etwa 1.10⁻⁶ mbar·m/(s·bar), bevorzugt einen Wert von etwa 5·10⁻⁷ mbar·m/(s·bar), mehr bevorzugt einen Wert von etwa 1·10⁻⁷ mbar·m/(s·bar), noch mehr bevorzugt einen Wert von etwa 5·10⁻⁸ mbar·m/(s·bar), noch viel mehr bevorzugt einen Wert von etwa 1·10⁻⁸ mbar·m/(s·bar), am meisten bevorzugt einen Wert von etwa 5·10⁻⁹ mbar·m/(s·bar) nicht übersteigt.

Weist ein Hüllenmaterial für ein bestimmtes Prüffluid eine Permeationsrate von 1.10⁻⁶ mbar·m/(s·bar) auf, so wird beispielsweise bei 1 bar Druckunterschied von Prüffluid zwischen beiden Seiten des Hüllenmaterials durch eine Fläche von 1 m² des Hüllenmaterials ein Prüffluidstrom verursacht, der dem Prüffluidstrom einer Leckrate von 5·10⁻⁸ mbar·m³/s bzw. 5·10⁻⁵ mbar·l/s gleichkommt.

Anders ausgedrückt kann eine Permeationsrate von 1·10⁻⁶ mbar·m/(s·bar) als eine effektive Premeationsströmungsgeschwindigkeit des entsprechenden Prüffluid durch das Hüllenmaterial betrachtet werden, welche sodann einen äquivalenten Wert von 1.10⁻⁹ m/s aufweist. Die derart bestimmte Permeationsrate bzw. Premeationsströmungsgeschwindigkeit ist dabei ein Parameter, welcher eine bestimmte Kombination aus Hüllenmaterial und Prüffluid charakterisiert.

Eine Möglichkeit, die Permeationsrate bzw. die Premeationsströmungsgeschwindigkeit für ein bestimmtes Prüffluid durch ein Hüllenmaterial zu bestimmen, welche insbesondere zu Festlegung der erfindungsgemäßen Obergrenze der Permeation herangezogen werden kann, liegt beispielsweise darin, einen Beutel aus dem Hüllenmaterial in einen Prüfbehälter einzubringen, den Prüfbehälter zu evakuieren, d.h. beispielsweise einen Druck von 10mbar, oder einen Druck von nicht mehr als 10mbar, vorzugsweise zwischen 10⁻² mbar und 10mbar, innerhalb des Prüfbehälters unmittelbar außerhalb des Beutels bzw. Testbehälters zu erzeugen und den Beutel sodann mit dem bestimmten Prüffluid mit einem Druck von beispielsweise 50 mbar zu füllen. Durch Messen der Konzentration von unmittelbar außerhalb des Testbehälters im Prüfbehälter vorhandenem Prüffluid kann sodann mit der Kenntnis der Oberflächengröße des Hüllenmaterials des Beutels die Permeationsrate bzw. die Premeationsströmungsgeschwindigkeit des Prüffluid durch das Hüllenmaterial bestimmt werden. Dabei ist diese Permeationsmessung insbesondere bei Raumtemperatur (20° C) durchzuführen.

Vorzugsweise besteht ein Druckunterschied von Prüffluid, bei welchem ein Testdruck von Prüffluid im Testbehälter größer ist als ein Umgebungsdruck unmittelbar außerhalb des Testbehälters. Der Druckunterschied dient dabei vorzugsweise als treibende Kraft, um im Falle eines Lecks im Testbehälter Prüffluid aus dem Testbehälter herauszutreiben, so dass es außerhalb des Testbehälters detektiert werden kann. Dazu kann der Gesamtdruck bzw. der absolute Druck innerhalb des Testbehälters größer sein als der Gesamtdruck außerhalb des Testbehälters. Beispielsweise kann sich im Testbehälter im Wesentlichen nur Prüffluid befinden während außerhalb des Testbehälters im Wesentlichen ein Vakuum herrscht.

Vorzugsweise umfasst das Prüffluid einen oder mehrere der Stoffe Ne, Ar, Kr, Xe, Rn, CO₂, H₂O und SF₆. Dabei können für unterschiedliche Hüllenmaterialen unterschiedlicher Testbehälter unterschiedliche Prüffluide vorteilhaft sein. Ferner können für unterschiedliche Dicken des Hüllenmaterials unterschiedliche Prüffluide vorteilhaft sein. Ein Prüffluid ist insbesondere dann für ein Hüllenmaterial vorteilhaft bzw. geeignet, wenn die Permeationsrate des Prüffluids durch das Hüllenmaterial einen Wert von 1·10⁻⁶ mbar·m/(s·bar) nicht übersteigt. Weist ein Prüffluid nur eine derart geringe Permeation durch ein Hüllenmaterial auf, so bietet dies den Vorteil eines längeren Rückhaltezeitraums, d.h. dass mehr Zeit zur Verfügung steht um den kompletten Prüfablauf durchzuführen bevor das durch intaktes Hüllenmaterial diffundierendes Prüffluid eine Unterscheidung zwischen einem defekten und einem intakten Prüfling (Testbehälter) erschwert oder unmöglich macht. Dadurch kann insbesondere auch die Befüllung des Testbehälters mit Prüffluid mehr Zeit in Anspruch nehmen, ohne dass bereits während der Befüllung ein hohes Maß an permeiertem Prüffluid die Zuverlässigkeit der Messung gefährdet. Dies erlaubt eine schonendere Befüllung des Testbehälters mit Prüffluid, als dies in herkömmlichen Verfahren möglich wäre, wie etwa wenn He als Prüffluid verwendet wird.

Beispielsweise kann bei der Verwendung von SF₆ eine Messzeit zur Evaluierung bzw. Bestimmung der Dichtigkeit des Testbehälters deutlich länger gewählt werden als bei der Verwendung von He, so dass eine längere Akkumulation bzw. eine größere Menge des durch ein Leck im Testbehälter austretenden Prüffluids der Messung zugrunde gelegt werden kann. Dies kann somit die Sensitivität des Testsystems erhöhen, so dass auch Lecks mit kleinen Durchmessern selbst in Testbehältern mit großer Oberfläche zuverlässig detektiert werden können.

Ausgehend vom Stand der Technik würde ein Fachmann vermuten, dass zum zuverlässigen Detektieren von kleinen Lecks, beispielsweise mit einem Durchmesser in der Größenordnung von 1 µm, sehr schnell diffundierende und leicht zu detektierende Prüffluide wie etwa He vorzuziehen sind.

Im Rahmen der Erfindung wurde jedoch erkannt, dass im Gegensatz zu der Erwartung eines Fachmanns und der im Stand der Technik etablierten Praxis die Verwendung von Gasen mit eher trägerem Diffusionsverhalten, wie etwa SF₆, eine zuverlässigere Detektion von derart kleinen Lecks ermöglicht, wenn das erfindungsgemäße Verfahren angewendet wird.

Beispielsweise kann für Testbehälter, deren Hüllenmaterial PE (Polyethylen) und/oder EVOH (Ethylenvinylalkohol) und/oder EVA (Ethylenvinylacetat) umfasst oder daraus besteht und eine Dicke beispielsweise in einem Bereich von etwa 100 µm bis etwa 1000 µm aufweist, SF₆ eine vorteilhafte Wahl für das Prüffluid sein. Ein Prüffluid kann dabei rein sein, d.h. lediglich aus einer Art von Atomen oder Molekülen bestehen, oder ein Gemisch sein, d.h. unterschiedliche Atome und/oder Moleküle umfassen. Vorzugsweise liegt der Druckunterschied in einem Bereich von etwa 10 mbar bis etwa 1 bar. Mehr bevorzugt liegt der Druckunterschied in einem Bereich von etwa 20 mbar bis etwa 0,5 bar, noch mehr bevorzugt in einem Bereich von etwa 30 mbar bis etwa 0,4 bar, am meisten bevorzugt in einem Bereich von etwa 50 mbar bis etwa 0,3 bar. Besonders bevorzugt ist der Druckunterschied derart, dass sich der Testbehälter aufbläst bzw. aufbläht bzw. entfaltet und dass im Falle eines Lecks in dem Testbehälter ein Prüffluidstrom auf effiziente Weise aus dem Testbehälter austritt. Jedoch ist der Druckunterschied vorzugsweise nicht so groß, dass aufgrund des Druckunterschieds mechanische Schäden des Hüllenmaterials des Testbeutels zu befürchten sind und/oder auftreten.

Vorzugsweise erfolgt die Detektion des Prüffluids außerhalb des Testbehälters zumindest teilweise in einem Zeitraum, der mehr als 8 Sekunden weiter bevorzugt mehr als 12 Sekunden, noch weiter bevorzugt mehr als 20 Sekunden, am meisten bevorzugt mehr als 30 Sekunden nach dem Einfüllen des Prüffluids andauert. "Nach dem Einfüllen" bedeutet dabei, dass der Vorgang des Einfüllens des Prüffluids vorzugsweise vollständig abgeschlossen ist, d.h. beispielsweise dass die für das Einfüllen des Prüffluids in den Testbehälter geöffneten Ventile wieder vollständig geschlossen sind. Alternativ oder zusätzlich kann "Nach dem Einfüllen" auch bedeuten, dass der Druck innerhalb der Testbehälters den während des Testvorgangs (nach dem Evakuieren des Prüfbehälters) erreichten Maximaldruck erstmals bis auf zumindest 80%, vorzugsweise zumindest 90% noch mehr bevorzugt zumindest 95% erreicht hat.

Erfindungsgemäß weist das zumindest eine Hüllenmaterial eine Dicke von nicht mehr als etwa 2 mm, bevorzugt nicht mehr als etwa 1 mm, weiter bevorzugt nicht mehr als etwa 500 µm, noch weiter bevorzugt nicht mehr als etwa 400 µm, am meisten bevorzugt nicht mehr als etwa 300 µm auf.

Erfindungsgemäß umfasst das zumindest eine Hüllenmaterial einen Kunststoff, insbesondere einen oder mehrere Kunststoffe der Liste umfassend EVA, EVOH und PE. Besonders bevorzugt ist das Hüllenmaterial des Testbehälters derart ausgebildet, dass der Testbehälter flexibel ist. Beispielsweise ist der Testbehälter ein Plastikbeutel, eine Plastiktüte oder ein Plastiksack.

Das Hüllenmaterial kann beispielsweise eine oder mehrere Lagen bzw. Schichten EVA und/oder eine oder mehrere Lagen EVOH umfassen. Bevorzugt weist das Hüllenmaterial eine Schicht aus EVOH auf, welche auf beiden Seiten von jeweils zumindest einer Schicht aus EVA umgeben ist.

Das Fassungsvermögen des flexiblen Testbehälters beträgt zumindest etwa 10 l, bevorzugt zumindest etwa 25 l, am meisten bevorzugt zumindest etwa 50 I.

Testbehälter mit unterschiedlichen Größen und/oder Dicken des Hüllenmaterials können dabei beispielsweise unterschiedliche Fülldrücke und/oder unterschiedliche Druckunterschiede benötigen, um sich in einer für die Messung geeigneten Weise zu entfalten bzw. aufzublasen. Ferner können auch Testbehälter mit unterschiedlichen Fassungsvermögen unterschiedliche Prüffluide als vorteilhaft erscheinen lassen, da sich oftmals Testbehälter mit unterschiedlichen Fassungsvermögen in der Größe der Oberfläche des Hüllenmaterials unterscheiden und somit die Permeation mehr oder weniger kritisch für den Integritätstest in Erscheinung tritt.

Vorzugsweise erfolgt das Detektieren des unmittelbar außerhalb des Testbehälters vorhandenen Prüffluids mittels LASER-Absorption. Vorzugsweise wird außerhalb des Testbehälters die Absorption bzw. Extinktion bzw. Transmission von LASER-Strahlung bei einer oder mehreren bestimmten Wellenlängen gemessen und auf Basis der auftretenden Absorption bzw. Extinktion bzw. Transmission die Anwesenheit von Prüffluid außerhalb des Testbehälters bestimmt. Insbesondere erfolgt die Messung mittels Licht und/oder LASER-Strahlung einer oder mehrerer Wellenlängen, welche von Atomen und/oder Molekülen des Prüffluids besonders effizient absorbiert und/oder gestreut wird bzw. werden. Dazu lässt man das Licht vorzugsweise über eine vorbestimmte Distanz außerhalb des Testbehälters propagieren, bevor anschließend dessen Intensität mittels eines Detektors bestimmt wird. Ein derartiger Detektor kann beispielsweise als Fotodiode ausgebildet sein, welche sensitiv für das verwendete Licht ist. Das verwendete Licht muss dabei nicht notwendigerweise LASER-Strahlung sein, sondern kann auch anderen Lichtquellen entstammen, wie etwa LEDs oder thermischen Strahlern. In manchen Fällen kann eine vorherige spektrale Filterung des Lichtspektrums vorteilhaft sein.

Verschiedene Prüffluide können dabei verschiedene Anforderungen an die spektralen Charakteristiken des verwendeten Lichts erfordern. Eine Verwendung von LASER-Absorption zum Nachweis von SF₆ im Rahmen eines Diffusionstests für poröse Filter ist beispielsweise in der Druckschrift EP 0 640 822 B1 beschrieben.

Alternativ oder zusätzlich können auch andere im Stand der Technik bekannte Verfahren zum Nachweis von Gasen, verwendet werden. Beispiele für derartige Verfahren sind Gaschromatographie, Massenspektrometrie und/oder chemische Nachweisverfahren.

In einem weiteren Aspekt betrifft die Erfindung die Verwendung einer Testvorrichtung zur Durchführung eines Integritätstests an einem ein flexibles Hüllenmaterial umfassenden Beutel zur Bioprozessierung, mit
- einer Prüfgasquelle, aus der ein Prüfgas in den Beutel einfüllbar ist; und
- einem Prüfgasdetektor zum Detektieren von Prüfgases unmittelbar außerhalb des Beutelts;
zur Durchführung eines Verfahrens gemäß der vorliegenden Erfindung insbesondere in einer der hier beschriebenen Ausführungsformen.

Die Prüffluidquelle kann dabei ein Reservoir von Prüffluid umfassen. Beispielsweise kann die Prüffluidquelle einen Tank oder eine Gasflasche umfassen, welche Prüffluid beinhaltet und an die Testvorrichtung abgeben kann. Darüber hinaus kann die Prüffluidquelle Teil einer Prüffluidversorgungseinheit sein, welche beispielsweise ferner Mittel zum Recycling bzw. zum Auffangen und/oder Wiederverwerten von verwendetem Prüffluid umfasst.

Der Prüffluiddetektor umfasst vorzugsweise eine Vorrichtung zur Messung von LASER-Absorption. Alternativ oder zusätzlich kann der Prüffluiddetektor ausgelegt sein, anderweitige Verfahren zum Nachweis von Gasen zu verwenden. Beispiele für derartige Verfahren sind, wie bereits oben beschrieben, Gaschromatographie, Massenspektrometrie und/oder chemische Nachweisverfahren.

In einem weiteren Aspekt betrifft die Erfindung die Verwendung einer erfindungsgemäßen Testvorrichtung zur Durchführung eines Integritätstests an einem flexiblen Testbehälter gemäß dem erfindungsgemäßen Verfahren.

Ferner betrifft die Erfindung in einem weiteren Aspekt die Verwendung von SF₆ zur Durchführung eines Integritätstests an einem flexiblen, zumindest ein Hüllenmaterial umfassenden Testbehälter, wobei das zumindest eine Hüllenmaterial einen oder mehrere Kunststoffe der Liste umfassend EVA, EVOH und PE umfasst.

Die Erfindung wird nachfolgend anhand von in Figuren dargestellten Ausführungsbeispielen näher erläutert. Einzelne, in den Figuren dargestellte Aspekte der Ausführungsformen können mit anderen Ausführungsformen kombiniert werden. Es zeigen:
- **Fig. 1:**: eine schematische Darstellung einer erfindungsgemäßen Testvorrichtung in einer bevorzugten Ausführungsform zur Durchführung eines Integritätstests an einem flexiblen Testbehälter;
- **Fig. 2:**: ein Flussdiagram eines erfindungsgemäßen Verfahrens in einer bevorzugten Ausführungsform zur Durchführung eines Integritätstests an einem flexiblen Testbehälter;
- **Fig. 3A:**: ein Diagramm mit Zeitverläufen von gemessenen Änderungen der Prüffluidmenge außerhalb des Testbehälters für einen dichten und mehrere defekte Testbehälter bei Verwendung von He als Prüffluid;
- **Fig. 3B:**: ein Diagramm mit den in Fig. 3A dargestellten Zeitverläufen auf einer längeren Zeitskala;
- **Fig.4:**: ein Diagramm mit Zeitverläufen von gemessenen Änderungen der Prüffluidmenge außerhalb des Testbehälters für einen dichten und mehrere defekte Testbehälter bei Verwendung von SF₆ als Prüffluid;
- **Fig. 5:**: ein Diagramm, welches bei Verwendung von Helium als Prüffluid den Durchmesser des kleinsten zuverlässig detektierbaren Loches für verschiedene Testbehältervolumen zeigt.

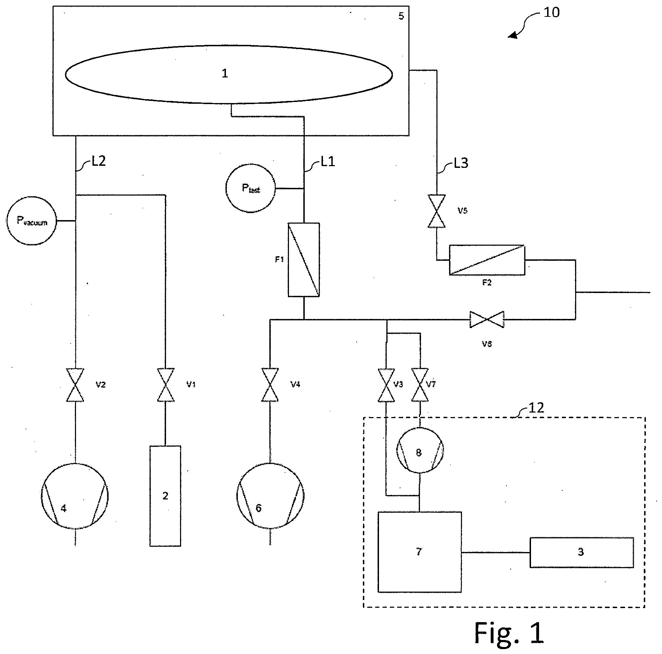

**Fig. 1** zeigt eine schematische Darstellung einer erfindungsgemäßen Testvorrichtung 10 gemäß einer bevorzugten Ausführungsform zur Durchführung eines Integritätstests an einem flexiblen Testbehälter 1.

Die Testvorrichtung 10 weist einen Prüfbehälter 5 auf, der vorzugsweise öffenbar und fluiddicht verschließbar ausgebildet ist. Der Prüfbehälter 5 kann formstabil ausgebildet sein und z.B. Metall- und/oder Kunststoffwände aufweisen. Der Prüfbehälter 5 ist vorzugsweise dazu ausgebildet und vorgesehen, einem Unterdruck, insbesondere einem Vakuum, in seinem Innenraum standzuhalten. "Unterdruck" bedeutet dabei, dass der Druck im Innenraum des Prüfbehälters kleiner ist als außerhalb des Prüfbehälters. Beispielsweise kann der Prüfbehälter 5 ausgelegt sein, um einem Druck im Innenraum beispielsweise zwischen etwa 10⁻⁷ mbar und etwa 100 mbar und einem Atmosphärendruck von etwa 1 bar außerhalb des Testbehälters standzuhalten, d.h. im Wesentlichen unter einem derartigen Druckunterschied formstabil und/oder fluiddicht zu bleiben. Eine (in Figur 1 nicht gezeigte) Öffnung des Prüfbehälters 5 kann Dichtungen aufweisen, um einen fluiddichten Verschluss zu gewährleisten. Die Öffnung kann beispielsweise dazu dienen, einen oder mehrere Testbehälter in den Prüfbehälter einbringen und/oder entnehmen zu können und nach dem Einbringen und/oder Entnehmen des Testbehälters den Prüfbehälter fluiddicht verschließen zu können. "Im Wesentlichen fluiddicht" bedeutet dabei, dass der Testbehälter den Druckunterschied zwischen Innenraum und Außenraum des Prüfbehälters über eine ausrechend lange Zeit innerhalb gewünschter Toleranzgrenzen halten kann, um einen Integritätstest des im Prüfbehälter angebrachten Beutels bzw. der im Prüfbehälter angebrachten Beutel zuverlässig durchführen zu können.

Im Prüfbehälter 5 ist der flexible Testbehälter 1 vorzugsweise entnehmbar angeordnet. Der Prüfbehälter 5 kann eine mechanische Unterstützung, insbesondere eine auf den Testbehälter 1 abgestimmte Auflagefläche, aufweisen, auf die der Testbehälter 1 im Wesentlichen faltenfrei auflegbar ist. Die mechanische Unterstützung kann aus einem porösen Material ausgebildet sein, wodurch ein Blockieren einer Leckage des Testbehälters durch die Unterstützung verhindert werden kann.

Der zu testende flexible Testbehälter 1 kann als einzelner Behälter ausgebildet sein, oder als eine Anordnung mehrerer Behälter, die z.B. durch Schläuche miteinander verbunden sind. Der Testbehälter 1 ist zumindest teilweise flexibel ausgebildet.

Der Testbehälter 1 weist eine Öffnung auf, die an eine Testbehälterzuleitung L1 angekoppelt ist. Über die Testbehälterzuleitung L1 können dem Innenraum des Testbehälters 1, welcher im Prüfbehälter 5 angebracht ist, Fluide zugeführt und/oder aus dem Innenraum des Testbehälters 1 Fluide abgeführt bzw. abgepumpt werden. Insbesondere kann der Testbehälter 1 über die Testbehälterzuleitung L1 evakuiert und/oder mit Prüffluid befüllt und/oder belüftet werden.

Beispielsweise kann während des Bereitstellens der Unterdrücke im Testbehälter 1 und im Prüfbehälter 5 die Höhe des Unterdrucks im Testbehälter auf die Höhe des Unterdrucks im Prüfbehälter abgestimmt sein. Unterdruck bedeutet in diesem Zusammenhang ein niedrigerer Druck als der außerhalb des Prüfbehälters 5 vorhandene Druck, wie etwa Atmosphärendruck. Hierbei können z.B. beide Unterdrücke aktiv überwacht und/oder angesteuert werden, beide Unterdrücke über eine gemeinsame Vakuumpumpe erzeugt werden, und/oder während des Abpumpens ein Verbindungsventil zwischen den beiden Innenräumen geöffnet werden. Insbesondere kann hierbei ein Einhalten einer Druckunterschiedsobergrenze zwischen dem Druck im Innenraum des Prüfbehälters und dem Druck im Innenraum des Testbehälters vorgesehen und bereitgestellt werden.

Gemäß einer Weiterbildung dieser Ausführungsform erfolgt während des Bereitstellens der Unterdrucke im Testbehälter und im Prüfbehälter ein Druckausgleich zwischen dem Innenraum des Testbehälters und dem Innenraum des Prüfbehälters. Dies kann z.B. über ein Öffnen eines Trennventils zwischen den beiden genannten Innenräumen erfolgen. Durch den Druckausgleich wird ein schädlich hoher Druckunterschied zwischen den beiden genannten Innenräumen vermieden.

Der Druckausgleich zwischen dem Innenraum des Testbehälters 1 und dem Innenraum des Prüfbehälters 5 kann durch eine Abstimmung zwischen einer Prüfbehälterpumpe 4 zum Abpumpen des Innenraums des verschlossenen Prüfbehälters 5 und einer Testbehälterpumpe 6 zum Abpumpen des Innenraums des Testbehälters 6 erfolgen. So kann z.B. während des Betriebs zumindest eine der beiden genannten Pumpen 4 und 6 so angesteuert werden, dass die Unterdrücke in den beiden Innenräumen aufeinander abgestimmt werden. Die Ansteuerung der zumindest einen Pumpe kann ein Drosseln, zeitweises Abschalten, und/oder ein Verstärken der Pumpleistung beinhalten.

Alternativ oder zusätzlich kann der Druckausgleich mittels eines Trennventils (nicht gezeigt) erfolgen. Das Trennventil ist dabei so angeordnet, dass es den Innenraum des Prüfbehälters 5 vom Innenraum des Testbehälters 1 trennt. Das Trennventil kann dabei in einer entsprechenden Verbindungsleitung angeordnet sein. Das Trennventil ist ansteuerbar und kann geöffnet und geschlossen werden.

Gemäß einer Ausführungsform wird im Testbehälter 1 und im Prüfbehälter 5 ein im Wesentlichen gleich hoher Unterdruck bereitgestellt.

Gemäß der gezeigten Ausführungsform ist ferner der Innenraum des Prüfbehälters 5 vorzugsweise an zwei Zuleitungen angeschlossen, nämlich an eine Prüfbehälterzuleitung L2 und an eine Prüfbehälterbelüftungsleitung L3. Über die Prüfbehälterzuleitung L2 und ein Prüfbehälterevakuierungsventil V2 ist der Innenraum des Prüfbehälters 5 mit einer Prüfbehälterpumpe 4 verbindbar. Weiterhin ist der Innenraum des Prüfbehälters 5 über die Prüfbehälterzuleitung L2 und ein Detektorventil V1 mit einem Prüffluiddetektor 2 verbindbar. Der für das verwendete Prüffluid taugliche Prüffluiddetektor 2 dient zur Detektion des aus dem Testbehälter 1 austretenden Prüffluids im Falle einer Leckage im Testbehälter 1, wobei zumindest ein Teil des Prüffluids im Falle einer Leckage vorzugsweise im Innenraum des Prüfbehälters 5 aber außerhalb des Testbehälters 1 vorhanden ist und dort durch den Prüffluiddetektor 2 ab einer Mindestkonzentration detektiert werden kann.

Der Prüffluiddetektor 2 ist dazu ausgebildet und vorgesehen, die Konzentration eines vorbestimmten Prüffluids im Innenraum des Prüfbehälters 5 zu detektieren. Beispielsweise kann der Prüffluiddetektor 2 einen Gasdetektor auf Basis einer LASER-Absorption und/oder einen Gaschromatographen und/oder ein Massenspektrometer und/oder optisches Spektrometer umfassen.

Die Prüfbehälterpumpe 4 kann als Hochvakuumpumpe ausgebildet sein, die den Innenraum des Prüfbehälters 5 vorzugsweise auf ein Hochvakuum mit einem Druck von nicht größer als 10⁻³ mbar evakuieren kann, z.B. um eine sehr geringe Hintergrundleckrate im Prüfbehälter 5 bereitzustellen. Die Hintergrundleckrate ist dabei die detektierte Leckrate, welche detektiert wird, wenn kein Prüffluid in den Testbehälter 1 und/oder den Prüfbehälter 5 eingeführt wird. Die Hintergrundleckrate kann beispielsweise durch von vorherigen Messungen noch im Prüfbehälter 5 vorhandenem Prüffluid oder von einer mangelbehafteten Dichtigkeit des Prüfbehälters beeinflusst werden.

Eine geringe Hintergrundleckrate ermöglicht eine schnelle Messung. Je kleiner die Hintergrundleckrate im Prüfbehälter 5 ausgebildet ist, desto deutlicher ist ein dynamisches Verhalten, wie etwa der Anstieg des Messsignals, der bestimmten Leckrate. Eine niedrige Hintergrundleckrate erhöht somit die Geschwindigkeit, mit welcher ein Leck bzw. eine undichte Stelle im Testbehälter 1 im Falle eines Defekts des Testbehälters 1 detektiert werden kann. Ein solcher dynamischer Anstieg der Konzentration von Prüffluid im Innenraum des Prüfbehälters 5, insbesondere bevor eine merkliche Permeation durch Seitenwände des Testbehälters 1 auftritt, kann zur Erkennung einer Leckage im Testbehälter 1 ausgewertet werden. Insbesondere sind die Anforderungen an die Hintergrundleckrate, nämlich dass die Hintergrundleckrate besonders gering ist, dann von besonders großer Bedeutung, wenn aufgrund von rascher Permeation des Prüffluids durch den Testbehälter nur ein sehr begrenzter Messzeitraum zur Verfügung steht. In anderen Worten, je geringer die für die Messung zur Verfügung stehende Zeitdauer ist, desto größer sind die Anforderungen an die Hintergrundleckrate.

In der Testbehälterzuleitung L1 ist ferner ein Testbehälterfilter F1 angeordnet, das als ein Partikelfilter ausgebildet ist und vorzugsweise ein Durchströmen von Partikeln, insbesondere Schmutzpartikeln, durch die Testbehälterzuleitung L1 hemmt.

Über die Testbehälterzuleitung L1 und ein Testbehälterpumpventil V4 ist der Innenraum des Testbehälters 1 mit einer Testbehälterpumpe 6 verbindbar, die einen Unterdruck, insbesondere ein Vakuum, im Testbehälter 1 erzeugen kann.

Die Testbehälterpumpe 6 ist dazu ausgebildet und vorgesehen, zeitgleich zu der Evakuierung des Prüfbehälters 5, welche durch die Prüfbehälterpumpe 4 erfolgt, die Evakuierung bzw. das Abpumpen des Testbehälters 1 zu bewirken, womit ein Druckunterschied zwischen dem Innenraum und dem Außenraum des Testbehälters 1 reduziert oder gar ganz vermieden wird und somit die Gefahr einer Beschädigung des Testbehälters 1 aufgrund eines starken Aufblähens und/oder Komprimierens während des Abpumpens reduziert oder gar ganz eliminiert werden kann. Am Ende der Prüfung kann die Testbehälterpumpe 6 beispielsweise benutzt werden, um das Prüffluid wieder aus dem Testbehälter 1 zu evakuieren.

Weiterhin ist der Innenraum des Testbehälters 1 über die Testbehälterzuleitung L1 mit einer Prüffluidversorgungseinheit 12 verbunden. Die Prüffluidversorgungseinheit 12 ist dabei parallel über ein Prüffluidzufuhrventil V3 und über ein Prüffluidabfuhrventil V7 mit der Testbehälterzuleitung L1 verbunden. Parallel bedeutet dabei, dass das Prüffluidzufuhrventil V3 und das Prüffluidabfuhrventil V7 jeweils unabhängig voneinander, insbesondere direkt, mit der Testbehälterzuleitung L1 verbunden sind. Die Prüffluidversorgungseinheit 12 umfasst einen Prüffluidauffangbehälter 7 und einen Prüffluidvorratsbehälter 3. Der Prüffluidvorratsbehälter 3 ist dabei über den Prüffluidauffangbehälter 7 mit der Testbehälterzuleitung L1 verbunden und ist vorzugsweise ausgelegt, bei Bedarf eine gewünschte Prüffluidmenge in den Prüffluidauffangbehälter 7 einzubringen. Zwischen dem Prüffluidvorratsbehälter 3 und dem Prüffluidauffangbehälter 7 kann sich beispielsweise ein Ventil (nicht gezeigt) befinden, um den Zustrom von Prüffluid von dem Prüffluidvorratsbehälter 3 in den Prüffluidauffangbehälter 7 zu steuern bzw. zu regeln. Vorzugsweise wird in der gezeigten Ausführungsform SF₆ als Prüffluid verwendet.

Der Prüffluidauffangbehälter 7 ist über das Prüffluidzufuhrventil V3 vorzugsweise direkt mit der Testbehälterzuleitung L1 und somit mit dem Testbehälter 1 verbunden. Ferner ist der Prüffluidauffangbehälter 7 nacheinander über das Prüffluidabfuhrventil V7 und über eine Prüffluidrecyclingpumpe 8 mit der Testbehälterzuleitung L1 und somit mit dem Testbehälter 1 verbunden.

Die Prüffluidversorgungseinheit 12 ist dabei derart ausgelegt, dass durch das Öffnen des Prüffluidzufuhrventil V3 Prüffluid von dem Prüffluidauffangbehälter 7 über die Testbehälterzuleitung L1 in den Testbehälter 1 einströmen kann. Dies kann vorzugsweise derart geschehen, dass sich in dem Testbehälter 1 und vorzugsweise in der Testbehälterzuleitung L1 Prüffluid mit einem Testdruck Pₜₑₛₜ befindet. Der Testdruck Pₜₑₛₜ liegt dabei vorzugsweise in einem Bereich von etwa 1 mbar bis etwa 10 bar, weiter bevorzugt in einem Bereich von etwa 10 mbar bis etwa 1 bar, noch weiter bevorzugt in einem Bereich von etwa 20 mbar bis etwa 0,5 bar, am meisten bevorzugt in einem Bereich von etwa 50 mbar bis etwa 0,35 bar.

Das Prüffluid im Prüffluidauffangbehälter 7 und/oder im Prüffluidvorratsbehälter 3 kann unter einem vorbestimmten und/oder vorbestimmbaren Testdruck vorgespannt sein, um durch das Entspannen des Prüffluids in den Testbehälter 1 den Testdruck nahezu unverzüglich herzustellen wenn das Prüffluidzufuhrventil V3 geöffnet wird.

Die Prüffluidversorgungseinheit 12 ist ferner derart ausgelegt, dass durch das Öffnen des Prüffluidabfuhrventil V7 Prüffluid durch die Prüffluidrecyclingpumpe 8 über die Testbehälterzuleitung L1 aus dem Testbehälter 1 ausströmen kann bzw. abgepumpt werden kann und das abgepumpte Prüffluid in den Prüffluidauffangbehälter 7 einströmen kann. Insbesondere kann die Prüffluidrecyclingpumpe 8 den Testbehälter 1 von dem Prüffluid evakuieren und das dabei abgepumpte Prüffluid dem Prüffluidauffangbehälter 7 zur Wiederverwendung im Rahmen eines weiteren Integritätstests zuführen.

Vorzugsweise werden das Prüffluidabfuhrventil V7 und das Prüffluidzufuhrventil V3 nicht gleichzeitig geöffnet. In anderen Worten sind zu einem beliebigen Zeitpunkt vorzugsweise das Prüffluidzufuhrventil V3 oder das Prüffluidabfuhrventil V7 oder beide geschlossen.

In der gezeigten Ausführungsform umfasst die Testvorrichtung 10 ferner eine Prüfbehälterbelüftungsleitung L3. Durch ein Öffnen des Prüfbehälterbelüftungsventil V5 kann der Prüfbehälter bei Bedarf insbesondere auf Atmosphärendruck belüftet werden. Während der Belüftung des Prüfbehälters 5 strömt die zugeführte Luft durch das Prüfbehälterfilter F2, um das Eindringen von beispielsweise Schmutz bzw. Schmutzpartikeln in den Prüfbehälter zu vermeiden. Ferner umfasst die gezeigte Testvorrichtung 10 ein Testbehälterbelüftungsventil V6. Durch ein Öffnen des Testbehälterbelüftungsventils V6 können der Testbehälter 1, insbesondere der Innenraum des Testbehälter 1, sowie die damit verbundenen Leitungen bzw. Prüffluidleitungen belüftet werden.

Bevorzugt ist die Testbehälterpumpe 6 außerhalb des Prüfbehälters 5 angeordnet, wodurch eine kompakte Dimensionierung des Prüfbehälters ermöglicht wird.

Die Testvorrichtung 10 kann weiterhin eine Steuerung zum Ansteuern der Ventile und/oder Pumpen der Testvorrichtung 10 aufweisen. Die Steuerung kann einen Computerprozessor aufweisen.

Die Testvorrichtung 10 ermöglicht insbesondere, dass gleichzeitig ein Unterdruck im Prüfbehälter und im Testbehälter bereitgestellt werden kann.

In einer Ausführungsform weist die Testvorrichtung 10 ein Trennventil zwischen dem Innenraum des Testbehälters 1 und dem Innenraum des Prüfbehälters 5 auf (nicht gezeigt). Über das Trennventil kann ein Druckausgleich erfolgen, was eine Belastung des Testbehälters 1 bei unterschiedlich starker Ausbildung der Unterdrucke reduziert.

Die in Fig. 1 gezeigte Testvorrichtung 10 dient zur Durchführung eines Integritätstests an dem flexiblen Testbehälter 1. Der Testbehälter 1 ist dabei austauschbar und kein Bestandteil der Testvorrichtung 10. Die Testvorrichtung 10 kann vielmehr wiederholt verwendet werden zur Überprüfung einer Mehrzahl von unterschiedlichen flexiblen Testbehältern.

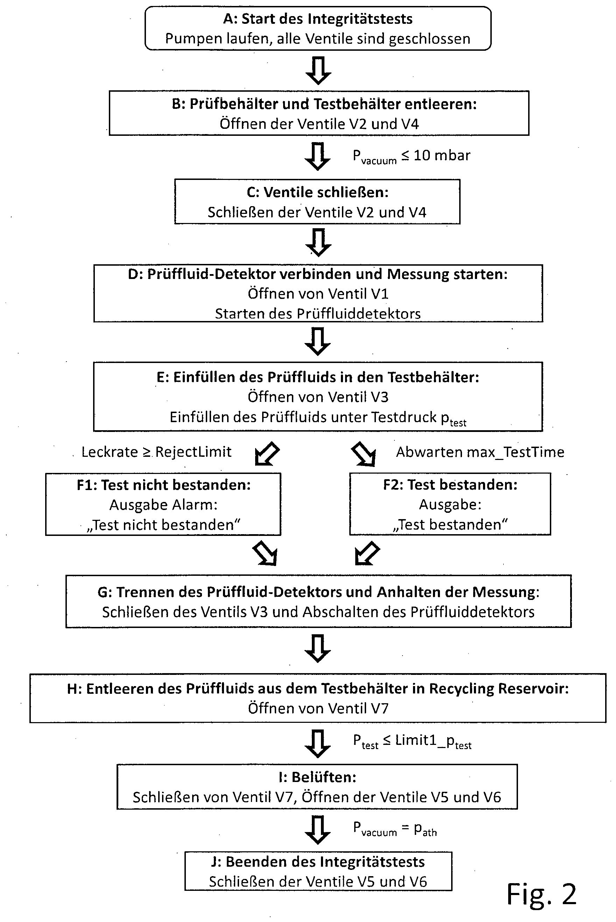

Der Ablauf des entsprechenden Testverfahrens ist in einem schematischen Ablaufdiagramm in Fig. 2 gezeigt. In diesem Ablaufdiagramm sind einzelne Verfahrensschritte eines Verfahrens zur Durchführung eines Integritätstests an einem flexiblen Testbehälter angegeben, die im Ablaufdiagramm der Fig. 2 zur Steuerung der in Fig. 1 gezeigten Testvorrichtung 10 gezeigt sind.

Mit Verfahrensschritt A beginnt der Integritätstest. Zu Beginn laufen alle Pumpen der Testvorrichtung, insbesondere die Prüfbehälterpumpe 4 und die Testbehälterpumpe 6. Vorzugsweise läuft zudem auch die Prüffluidrecyclingpumpe 8. Weiterhin sind zu Beginn des Verfahrens alle Ventile der Testvorrichtung 10 geschlossen.

In Verfahrensschritt B wird sowohl der Prüfbehälter 5 als auch der Testbehälter 1 entleert, genauer wird in diesen beiden Behältern jeweils ein Unterdruck gegenüber dem Atmosphärendruck bereitgestellt, z.B. ein Hochvakuum. Dies erfolgt durch ein Öffnen des Prüfbehälterevakuierungsventil V2 und des Testbehälterpumpventils V4, wodurch die beiden Pumpen 4 und 6 zugeschalten werden. Die Evakuierung des Testbehälters 1 erfolgt dabei vorzugsweise gleichzeitig bzw. parallel zur Evakuierung des Prüfbehälters 5. Beispielsweise kann zur Durchführung des Integritätstest im Prüfbehälter 5 und/oder im Prüffluiddetektor 2 bzw. in den Leitungen, welche den Prüfbehälter 5 mit dem Prüffluiddetektor 2 verbinden ein Druck in einem Bereich von etwa 10⁻⁵ mbar bis etwa 100 mbar, mehr bevorzugt in einem Bereich von etwa 10⁻³mbar bis etwa 50 mbar, noch mehr bevorzugt in einem Bereich von etwa 0.1 mbar bis etwa 20 mbar, vorherrschen.

Insbesondere kann der Druck derart gewählt sein, dass sich der Druck für den verwendeten Prüflluiddetektor 2 eignet. Aus diesem Grund können beispielsweise für unterschiedliche Arten von Prüffluiddetektoren 2 unterschiedliche Werte des Drucks notwendig bzw. geeignet sein. Beispielsweise kann für einen auf einem optischen Detektionsverfahren, wie etwa auf LASER-Absorption insbesondere zur Detektion von SF₆, basierenden Prüffluiddetektor 2 ein Druck von etwa 10 mbar vorteilhaft und/oder notwendig sein. Dagegen kann für eine Detektion von Prüffluid mittels eines auf einem Massenspektrometer basierenden Prüffluiddetektor 2 ein Druck von etwa 0,1 mbar vorteilhaft und/oder notwendig sein.

In Verfahrensschritt C werden das Prüfbehälterevakuierungsventil V2 und das Testbehälterpumpventil V4 geschlossen, so dass die jeweiligen Pumpen 4 und 6 von dem Testbehälter 1 und von dem Prüfbehälter 5 getrennt sind.

In Verfahrensschritt D wird das Detektorventil V1 geöffnet, so dass der Prüffluiddetektor 2 mit dem Prüfbehälter 5 verbunden ist. Ferner wird der Prüffluiddetektor 2 gestartet bzw. aktiviert bzw. in Operation versetzt. Vorzugsweise beginnt mit der Aktivierung des Prüffluiddetektors 2 die Erhebung von Messdaten über eventuell in dem Prüfbehälter 5 vorhandenes Prüffluid. Die Aktivierung des Prüffluiddetektors 2 kann dabei zeitlich vor, nach oder gleichzeitig mit der Öffnung des Detektorventils V1 erfolgen.

Optional kann nach Verfahrensschritt D ein Überprüfen der Startbedingungen erfolgen. Dies kann beispielsweise dazu dienen, eine abgestimmtere Reaktion auf unterschiedliche Messergebnisse bei der Vormessung, also vor Beginn der Hauptmessung zu erzielen. Unter Umständen kann es vorkommen, dass die Evakuierung auf den Unterdruck im Prüfbehälter 5, insbesondere auf ein Hochvakuum, sehr lange dauert (z.B. durch Ausgasungen aus dem Testbehälter 1). In diesem Fall kann auch die Hintergrundleckrate im Prüfbehälter 5 sehr stark absinken. Obwohl dies grundsätzlich für die Messung nicht negativ ist, wird dadurch aber auch der dynamische Anstieg der Hintergrundleckrate zum Beginn der Hauptmessung verändert. Je nach Methode der Auswertung kann es also vorteilhaft sein, dass sich die Hintergrundleckrate zum Start der Hauptmessung in einem definierten Fenster befindet. Sollte dieses Fenster unterschritten sein kann entsprechend Prüffluid in den Prüfbehälter 5 eingebracht werden.

In Verfahrensschritt E wird Prüffluid in den Testbehälter 1 eingefüllt. Der Testbehälter ist dabei zur Durchführung des Integritätstests in dem Prüfbehälter 5 angebracht. Das Einfüllen des Prüffluids in den Testbehälter 1 geschieht dabei durch ein Öffnen des Prüffluidzufuhrventils V3. Dabei wird so viel Prüffluid in den Testbehälter 1 eingefüllt, bis im Testbehälter 1 ein Testdruck ptest erreicht ist. Vorzugsweise ist der Testdruck ptest so groß, dass sich der Testbehälter 1 aufbläst bzw. aufbläht, d.h. sich im Wesentlichen entfaltet und der Testbehälter 1 im Wesentlichen prall gefüllt ist. "Im Wesentlichen prall gefüllt" bedeutet dabei, dass sich aufgrund des darin mit Testdruck ptest befindlichen Prüffluids der Testbehälter 1 bzw. das Hüllenmaterial zumindest teilweise strafft, ohne dass jedoch dabei mechanische Belastungen auftreten, welche den Testbehälter 1 bzw. das Hüllenmaterial des Testbehälters 1 beschädigen oder anderweitig negativ beeinflussen. Vorzugsweise wird nach der Befüllung des Testbehälters 1 das Prüffluidzufuhrventil V3 wieder geschlossen.

Mit dem Verfahrensschritt E beginnt somit die eigentliche Hauptmessung des Integritätstests. In Verfahrensschritt E erfolgt eine Bewertung des Testbehälters 1. Nach Ablauf einer vorbestimmten und/oder vorbestimmbaren Testzeit TestTime, ohne dass vom Beginn der Messung bis zum Ablauf der Testzeit TestTime das vom Prüffluiddetektor 2 bereitgestellte Signal einen vorbestimmten Grenzwert RejectLimit überschritten hat, wird der Testbehälter 1 als dicht bewertet (Verfahrensschritt F2). Wird der vorbestimmten Grenzwert RejectLimit überschritten, d.h. detektiert der Prüffluiddetektor 2 eine größere Menge an Prüffluid oder eine größere Änderungsrate von Prüffluid in dem Prüfbehälter 5 als ein vorbestimmter Grenzwert RejectLimit, so wird der Testbehälter 1 als nicht dicht bzw. als defekt bewertet (Verfahrensschritt F1). Hierbei kann das Verfahren bereits vor Ablauf der Testzeit TestTime abgebrochen werden, um eine erhöhte Kontamination des Prüfbehälters 5 mit Prüffluid zu vermeiden.

In Verfahrensschritt G wird der Prüffluiddetektor 2 vom Prüfbehälter 5 abgekoppelt und die Hauptmessung wird gestoppt. Der Prüffluiddetektor 2 wird durch ein Schließen des Detektorventils V3 abgekoppelt, was die Messung beendet. Vorzugsweise wird der Prüffluiddetektor 2 angehalten bzw. dessen Operation gestoppt.

In Verfahrensschritt H wird das im Testbehälter 1 vorhandene Prüffluid aus dem Testbehälter 1 abgepumpt. Dies geschieht durch die Prüffluidversorgungseinheit 12, insbesondere durch die Prüffluidrecyclingpumpe 8, indem das Prüffluidabfuhrventil V7 geöffnet wird. Das aus dem Testbehälter 1 abgepumpte Prüffluid wird durch die Prüffluidrecyclingpumpe 8 dem Prüffluidauffangbehälter 7 zugeführt und steht dort vorzugsweise für weitere Integritätstests bereit. Das Abpumpen des Prüffluids aus dem Testbehälter 1 gilt dann als abgeschlossen, wenn der im Testbehälter 1 vorherrschende Druck nicht größer als ein Wert Limit1_ptest ist. Der Wert Limit1_ptest ist dabei vorzugsweise nicht größer als 10 mbar, mehr bevorzugt nicht größer als 1 mbar, besonders bevorzugt nicht größer als 10⁻² mbar, am meisten bevorzugt nicht größer als 10⁻⁴ mbar.

Insbesondere kann es dann ratsam sein, das Prüffluid zu recyceln, wenn die Beschaffung des Prüffluids mit einem erheblichen finanziellen Aufwand verbunden ist und/oder wenn sich negative Einflüsse von in die Atmosphäre entweichendem Prüffluid nachteilig für die Umwelt und/oder in der Nähe befindliche Menschen auswirken könnte. Sind derartige Einschränkungen nicht zu befürchten, kann ein Unterlassen des Recyclings von Prüffluid unter Umständen eine effizientere Lösung darstellen.

In Verfahrensschritt I wird die Testvorrichtung 10 belüftet. Ist durch die Evakuierung ein vorbestimmter Druck im Testbehälter 1 unterschritten und das Prüffluid somit im Wesentlichen vollständig aus dem Testbehälter 1 evakuiert, wird das Ventil V7 wieder geschlossen. Danach wird die Testvorrichtung 10 belüftet, d.h. insbesondere der Testbehälter 1, der Prüfbehälter 5, sowie zumindest teilweise die damit verbundenen Leitungen. Die Belüftung kann durch ein Öffnen der Ventile V5 und V6 erfolgen. Vorzugsweise erfolgt die Belüftung, bis in den belüfteten Teilen der Testvorrichtung 10 Atmosphärendruck erreicht ist.

In Verfahrensschritt J ist das Ende des Integritätstests erreicht. Nach Erreichen des Atmosphärendrucks in den belüfteten Teilen der Testvorrichtung 10 werden die Ventile V5 und V6 geschlossen und die Testvorrichtung 10 somit in die Ausgangsposition versetzt, so dass ein neuer Prüfablauf begonnen werden kann.

Optional wird der Innenraum des Prüfbehälters 5 gespült, nachdem im Prüfbehälter 5 Prüffluid detektiert wurde. Ist ein Prüfling, also ein Testbehälter 1, mangelhaft, so tritt während des Testverfahrens Prüffluid aus dem Testbehälter 1 in den Innenraum des Prüfbehälters 5 ein. Um Beschädigungen des Prüfbehälters 5 durch Kontamination mit dem Prüffluid zu vermeiden, wird dieser nach einem mangelhaft getesteten Testbehälter 1 durch Spülung gereinigt. Nach dem Test eines integren Testbehälters ist eine Spülung nicht unbedingt erforderlich und kann eingespart werden. Somit kann der Innenraum des Prüfbehälters 5 insbesondere lediglich nach jedem Test gespült werden, bei dem ein Testbehälter 1 als mangelhaft eingestuft wurde. Dies stellt einen weiteren Vorteil des erfindungsgemäßen Verfahrens dar, da aufgrund der geringen Permeation von Prüffluid durch integres Hüllenmaterial die Menge an in den Prüfbehälter gelangendem Prüffluid sehr viel kleiner ist, als bei der Verwendung von einem Prüffluid, welches eine höhere Permeationsrate aufweist.

Ferner wird optional eine Hintergrundkonzentration an Prüffluid im Prüfbehälter 5 eingestellt. Unter Umständen kann das Bereitstellen des Unterdrucks im Prüfbehälter lange dauern, insbesondere bei Auftreten von Ausgasungen aus dem Testbehälter. In diesem Fall kann auch die Hintergrundleckrate stark absinken. Obwohl dies grundsätzlich eher positiv für die Durchführung des Integritätstest ist, kann dadurch aber der dynamische Anstieg der Leckrate zum Beginn der Messung verändert werden. Je nach Auswertmethode des Integritätstests kann es deswegen vorteilhaft sein, wenn die Hintergrundleckrate zu Beginn der Messung in einem vordefinierten Bereich und/oder Fenster ist. Falls dieser vordefinierte Bereich unterschritten sein sollte, kann z.B. Prüffluid in den Prüfbehälter eingebracht werden. Dadurch wird die Hintergrundkonzentration an Prüffluid im Prüfbehälter vor Beginn der Messung zur Überprüfung der Integrität des Testbehälters aktiv eingestellt.

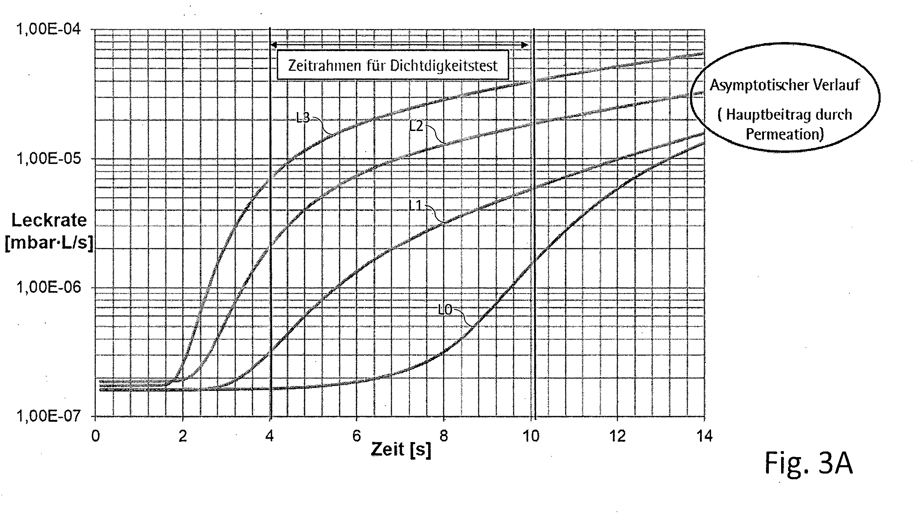

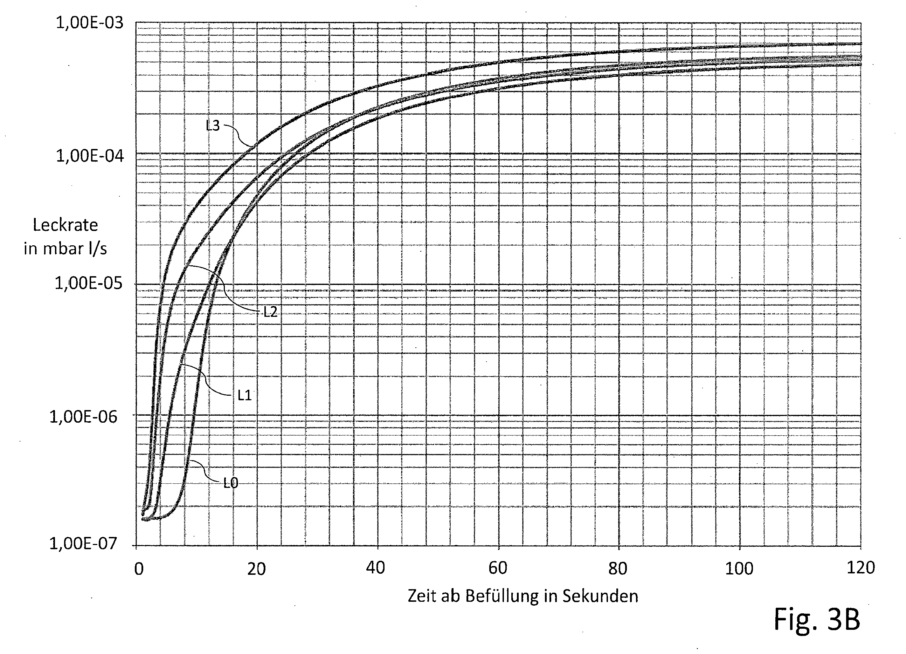

**Fig. 3A** zeigt in einem Diagramm mehrere Kurven L0 bis L3 von Zeitverläufen der gemessenen Leckrate von Prüffluid, mit welcher das Prüffluid aus dem Testbehälter 1 in den Prüfbehälter 5 eindringt und von dem Prüffluiddetektor 2 gemessen wird. Für die Integritätstests, deren zeitlicher Verlauf der Leckrate in Fig. 3 gezeigt ist, wurde gasförmiges He als Prüffluid verwendet. Jeder der getesteten, identischen Testbehälter war ein Beutel, welcher eine Schicht aus dem Kunststoffmaterial EVOH umfasst, wobei das Hüllenmaterial eine gesamte Dicke bzw. eine Wandstärke von 360 µm aufweist und der Beutel ein Fassungsvermögen von 50 l aufweist. Die Permeation von Prüffluid durch unversehrtes Hüllenmaterial wird dabei im Wesentlichen durch die genannte Schicht aus EVOH bestimmt. Der Druckunterschied zwischen dem Innenraum der Beutel und dem unmittelbaren Außenraum der Beutel betrug 50 mbar.

Ein erster Zeitverlauf L0 zeigt den zeitlichen Verlauf der Leckrate von Helium als Prüffluid eines unbeschädigten Testbehälters, d.h. eines Beutels, welcher kein Leck aufweist. Obwohl der Testbehälter 1 der Messung L0 kein Leck aufweist, steigt bereits nach etwa 5 Sekunden die gemessene Leckrate deutlich an. Der diesem Anstieg der Leckrate zugrunde liegende Prüffluidstrom aus dem Testbehälter 1 in den Prüfbehälter 5 wird durch Permeation des Prüffluids durch das Hüllenmaterial, insbesondere durch unbeschädigtes Hüllenmaterial, verursacht.

Ein zweiter Zeitverlauf L1 zeigt den zeitlichen Verlauf der Leckrate von Helium eines Testbehälters mit einem Leck mit 2 µm Durchmesser. Ein dritter Zeitverlauf L2 zeigt den zeitlichen Verlauf der Leckrate von Helium Prüffluid eines Testbehälters mit einem Leck mit 5 µm Durchmesser. Ein vierter Zeitverlauf L3 zeigt den zeitlichen Verlauf der Leckrate von Helium als Prüffluid eines Testbehälters mit einem Leck mit 7 µm Durchmesser. Die Lecks wurden durch das Einbringen eines Loches mit den genau definierten Durchmessern mittels eines LASERS in das Hüllenmaterial des Testbehälters erzeugt. Bei allen Kurven in Fig. 3 ist eine Hintergrundleckrate zwischen etwa 1.5·10⁻⁷ und 2·10⁻⁷ mbar-l/s bei der Zeit t=0 festzustellen.

Die Zeitverläufe L1, L2 und L3 der Leckraten der Beutel, welche ein Leck aufweisen, zeigen einen schnelleren Anstieg der Leckrate mit der Zeit als der unversehrte Beutel ohne Leck der Kurve L0. Die Kurven L1, L2 und L3 weisen dabei unabhängig von der Leckgröße sehr ähnliche Grenzwerte bzw. Sättigungswerte auf, denen sich die jeweiligen Zeitverläufe asymptotisch nähern (siehe Fig. 3B). Der Anstieg der entsprechenden Leckraten wird dabei einerseits durch einen Prüffluidstrom durch das jeweilige Leck im Hüllenmaterial verursacht, als auch durch eine Permeation von Helium durch das unversehrte Hüllenmaterial, wie anhand des unversehrten Beutels in Kurve L0 zu erkennen ist. Insbesondere bei längeren Testzeiten lassen sich also die von dem Prüffluidstrom durch die unterschiedlichen großen Lecks aufgrund des wachsenden Beitrags durch die Permeation nicht mehr zuverlässig ermitteln. Aus diesem Grund steht für einen Integritätstest von derartigen Beuteln lediglich eine sehr kurze Zeitspanne von wenigen Sekunden, wie etwa zwischen 4 und 8 Sekunden nach der Befüllung der Beutel, zu Verfügung. Zwischen 0 und 4 Sekunden nach der Befüllung droht das Messergebnis durch die Systemträgheit beeinflusst zu sein, da das Prüffluid eventuell noch nicht vollständig eingeströmt ist. Ab einem Zeitpunkt von etwa 10 Sekunden nach der Befüllung erschwert hingegen der aufgrund von Permeation auftretende Prüffluidstrom die Unterscheidung von Beuteln mit verschieden großen Lecks und dichten Beuteln.

Der Grund dafür, dass die Leckrate insbesondere zu Beginn mit der Zeit ansteigt und nicht zeitlich konstant ist, liegt insbesondere in der Trägheit des Testsystems 10. Trotz aller Optimierungen des Prüfablaufs benötigt insbesondere das Prüffluid Zeit, um in den Testbehälter einzuströmen und sich darin auszubreiten. Insbesondere bei großen Testbehältern 1, wie etwa bei Beuteln mit großem Fassungsvermögen von mehreren Litern oder gar mehreren 10 oder 100 Litern äußert sich die Trägheit des Systems in den Messkurven. Aus diesem Grund kann eine zuverlässige Bestimmung von Lecks regelmäßig erst nach einer Zeitspanne von mehreren Sekunden durchgeführt werden. Ferner ist es auch ratsam, nur solche Messwerte zu berücksichtigen, welche erst dann aufgenommen wurden, wenn das System genügend Zeit für einen signifikanten Signalanstieg hatte, d.h. wenn genügen Helium durch das Leck austreten und den Prüffluiddetektor 2 erreichen konnte. In den gezeigten Kurven ist dies etwa nach 4 Sekunden der Fall.

Da bereits nach wenigen Sekunden die gemessene Leckratenänderung aufgrund von Permeation stärker ansteigt als die Leckratenänderung aufgrund eines Lecks mit einem Durchmesser von wenigen µm, nimmt bereits nach wenigen Sekunden die Detektierbarkeit von Lecks mit einem Durchmesser von wenigen µm aufgrund der Permeation von He drastisch ab. Wie in Fig. 3 gezeigt, sind die Kurven L0 bis L3 bzw. die Zeitverläufe der Leckraten im gezeigten Fall bereits nach 14 Sekunden kaum mehr zu unterscheiden. Eine zuverlässige Detektion von Lecks kann daher nur bis zu etwa 10 Sekunden nach dem Befüllen des Testbehälters mit Helium durchgeführt werden.

Somit ist also mit Helium als Prüffluid lediglich in einem kurzen Zeitraum von wenigen Sekunden die zuverlässige Durchführung des Integritätstest möglich, nämlich in den in Fig. 3A gezeigten Fällen zwischen etwa 4 und etwa 10 Sekunden nach der Befüllung des Testbehälters 1. Während die untere Zeitgrenze durch die Reaktionszeit des Testsystems 10 bzw. des Prüffluids gegeben ist, ist die obere Zeitgrenze durch den Zeitraum in welchem die Permeation von Prüffluid durch das Hüllenmaterial des Testbehälters 1 noch nicht das Maß der Leckraten von den kleinsten zu detektierenden Lecks erreicht, bestimmt. Insbesondere bei Integritätstests von Testbehältern 1 bzw. Beuteln mit großem Fassungsvermögen führt dies oftmals zu Problemen, da diese eine lange Reaktionszeit des Testsystems 10 erfordern und andererseits auch eine große Oberfläche von Hüllenmaterial und somit ein hohes Maß an Permeation aufweisen.

**Fig. 3B** zeigt dieselben gemessenen Leckraten aus Fig. 3A auf einer längeren Zeitskala, welche von 0 bis 120 Sekunden reicht. Um Wiederholungen zu vermeiden soll auf Inhalte nicht näher eingegangen werden, welche bereits mit Bezug auf Fig. 3A erläutert wurden. In Fig. 3B ist insbesondere zu erkennen, dass sich sämtliche Kurven, also L0, L1, L2 und L3, sehr ähnlichen Sättigungswerten bzw. Endwerten der Leckrate nähern. Dies erlaubt daher keine zuverlässige Unterscheidung von undichten Beuteln mit verschiedenen Leckgrößen untereinander und/oder die Erkennung von undichten Beuteln, da der Beitrag der im Wesentlichen gleichen Permeationsrate aller Beutel den größten Beitrag zu den als Leckraten gemessenen Signalen aufweist.

Insbesondere ist in Fig. 3B ferner zu erkennen, dass für die getesteten Beutel, welche ein Fassungsvermögen von etwa 50 l und eine Hüllenmaterialfläche von etwa 8106 cm² aufweisen und mit He als Prüffluid bei einer Druckdifferenz von etwa 50 mbar getestet wurden, die He-Leckrate des dichten Beutels (Kurve L0) einen Wert von etwa 5.10⁻⁴ mbar-l/s aufweist. Dies entspricht somit einer unter Berücksichtigung der Hüllenmaterialoberfläche des Beutels und des Druckunterschieds ermittelten Permeationsrate von etwa 1,2·10⁻⁵ mbar-m/(bar-s). Ein zuverlässiger Integritätstest derartiger Beutel, insbesondere von Beuteln derartiger Größe, ist somit mit He kaum möglich.

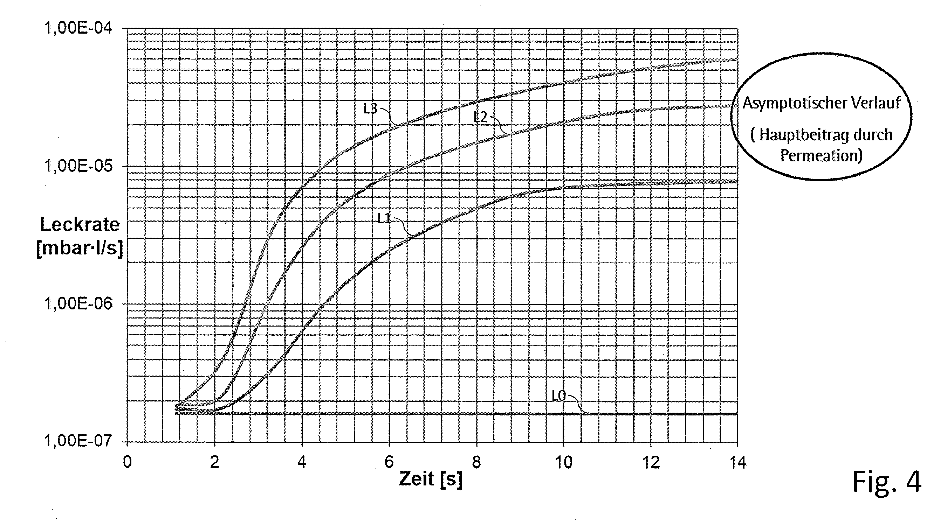

Analog zu Fig. 3A zeigt auch **Fig. 4** ein Diagramm mit mehreren Kurven L0 bis L3 von Zeitverläufen der Leckraten von Prüffluid, mit welcher das Prüffluid aus dem Testbehälter 1 in den Prüfbehälter 5 eindringt und von dem Prüffluiddetektor 2 gemessen wird. Für die in Fig. 4 gezeigten Zeitverläufe wurde jedoch nicht wie in Fig. 3A gasförmiges He verwendet, sondern gemäß einer weiteren Ausführungsform gasförmiges SF₆ (Schwefelhexafluorid). Die getesteten Testbehälter 1 waren dabei identisch zu den entsprechenden Testbehältern 1 aus Fig. 3A und Fig. 3B. Um Wiederholungen zu vermeiden, wird im Folgenden lediglich auf die Unterschiede zu dem in Fig. 3A gezeigten Diagramm eingegangen.

Im Unterschied zur Kurve L0 aus Fig. 3A bleibt die Kurve L0 in Fig. 4 im Wesentlichen bei einem konstanten Wert von etwa 1,5·10⁻⁷ mbar-l/s, welcher der Hintergrundleckrate entspricht. "Im Wesentlichen bei einem konstanten Wert" bedeutet dabei, dass es zu keiner wahrnehmbaren Änderung und insbesondere nicht zu einer Änderung kommt, welche einen signifikanten Einfluss auf den Integritätstest hat. Der Wert der Hintergrundleckrate zeigt ferner an, dass die Permeationsrate von SF₆ der getesteten Beuteln somit einen Wert von 3,7·10⁻⁷ mbar·l/(s·bar) nicht übersteigt, da ansonsten die ermittelte Leckrate für einen dichten Beutel (Kurve L0) die konstant gemessene Hintergrundteckrate übersteigen würde.

Demzufolge tritt bei der Verwendung von SF₆ als Prüffluid in Kombination mit den im Rahmen der Erfindung zu prüfenden Testbehältern 1 bzw. Beutel bzw. Hüllenmaterialien der Testbehälter 1 zu keiner merklichen Permeation von SF₆ durch das Hüllenmaterial. Die Ursache dafür kann beispielsweise darin liegen, dass die Permeation von SF₆ durch das Hüllenmaterial des Testbehälters 1 signifikant geringer ist als die Permeation von He. Dies kann beispielsweise daher rühren, dass SF₆ aus vergleichsweise großen Molekülen besteht und He dagegen aus vergleichsweise kleinen Atomen. Auch andere Gase, welche Moleküle oder Atome mit vergleichsweise großen Abmessungen in zumindest einer Raumrichtung umfassen (im Vergleich zu He) können daher oftmals eine geringe Permeation durch das Hüllenmaterial des Testbehälters aufweisen.

Da die Permeation im Wesentlichen keinen Beitrag zur gemessenen Leckrate in den Kurven L1, L2 und L3 in Fig. 4 liefert, weisen die gemessenen Leckraten L1, L2 und L3 größere Unterschiede voneinander auf, als die entsprechenden Leckraten in Fig. 3. Dies erlaubt eine einfachere und zuverlässigere Bestimmung der Leckgröße anhand der gemessenen Leckrate.

Ferner ist der Zeitraum, während dessen der Testbehälter 1 das Prüffluid effizient zurückhält und/oder die Permeation kein für die Messung störendes Ausmaß annimmt, deutlich länger als der entsprechende Zeitraum bei der Verwendung von He in Fig. 3. Dies hat den Vorteil, dass für die Durchführung des Integritätstests, bzw. für die Messung der Leckrate, zu einem späteren Zeitpunkt nach dem Befüllen des Testbehälters 1 begonnen werden kann und/oder über einen längeren Zeitraum nach dem Befüllen des Testbehälters 1 erfolgen kann, ohne dass eine negative Beeinflussung der Messung durch Permeation von Prüffluid zu befürchten ist. Dies ist insbesondere von Vorteil, um große Testbehälter 1 zu prüfen, welche eine große Oberfläche aufweisen und/oder einen längeren Zeitraum für das Erreichen eines stationären Zustands nach dem Befüllen des Testbehälters 1 benötigen. In anderen Worten reduziert in der gezeigten Ausführungsform die Verwendung von SF₆ störende Einflüsse auf das Messergebnis aufgrund von Permeation, wie dies beispielsweise bei der Verwendung von He als Prüffluid zu beklagen ist, und erlaubt einen späteren Beginn und/oder eine zeitliche Ausdehnung der Messdauer bei einem Integritätstest, was insbesondere für Integritätstests von großvolumigen Testbehältern 1, wie etwa Beuteln mit einem Fassungsvermögen von mehr als 10 l, vorteilhaft ist.

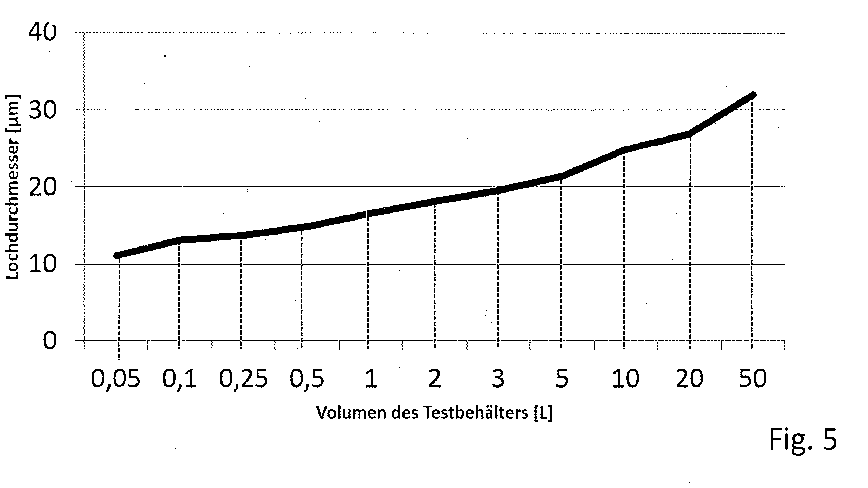

**Fig. 5** zeigt ein Diagramm, welches eine berechnete, äquivalente Größe von Lecks gegen das Volumen bzw. das Fassungsvermögen des mittels eines herkömmlichen He-basierten Integritätstests zu prüfenden Testbehälters 1 aufträgt. In anderen Worten zeigt das Diagramm in Fig. 5, wie groß der Durchmesser eines äquivalenten Lecks im Testbehälter eines bestimmten Volumens bzw. Fassungsvermögens ist, so dass es einen Prüffluidstrom verursacht, der gleich dem Prüfluidstrom aufgrund von Permeation durch das Hüllenmaterial des Testbehälters ist. Dabei wurde mittels einer Permeationsstudie, in der die Permeation von He durch einen eine EVOH-Schicht umfassenden Film untersucht wurde, die Permeationsrate von He ermittelt und dann die entsprechenden Werte für die jeweiligen Größen der Oberfläche der Beutel mit den entsprechenden Volumina bestimmt. Während der Permeationsstudie wurde ein Druckunterschied von 1 bar auf beiden Seiten der EVOH-Schicht eingestellt.

Dabei ist zu erkennen, dass bei einem 50 l Beutel beispielsweise die Permeation einen Prüffluidstrom verursacht bzw. ermöglicht, welcher dem Prüffluidstrom durch ein Leck mit etwa 30 µm Durchmesser entspricht. Bei einem Integritätstest von solch großen Beuteln wäre somit bei der Verwendung von He als Prüffluid eine Detektion von Lecks mit einem kleineren Durchmesser als 30 µm nicht oder kaum möglich. Vielmehr müsste ein zuverlässig nachweisbares Loch einen sehr viel größeren Durchmesser aufweisen als 30 µm, was demnach die Eignung eines herkömmlichen Integritätstest, insbesondere auf Basis von He, für die Beurteilung der Integrität von derart großen Beuteln stark einschränkt.

Wird dennoch ein herkömmliches Verfahren für einen Integritätstest, insbesondere unter Verwendung von He als Prüffluid, von großvolumigen Beuteln verwendet, so steht nur ein sehr eingeschränkter Zeitraum von wenigen Sekunden für die Beurteilung der Dichtigkeit des Beutels zur Verfügung, bevor der Beitrag der Permeation die Interpretation des Messsignals erschwert bzw. unmöglich macht. Gerade bei Beuteln mit großen Volumen kann allerdings das Entfalten bzw. Aufblähen des Beutels einige Sekunden in Anspruch nehmen, so dass auch eine zu kurze Messdauer das Messergebnis verfälschen kann (siehe Fig. 3). Somit ist ein herkömmliches Verfahren zur Durchführung von Integritätstests für derart große Beutel nur sehr begrenzt einsetzbar und mit signifikanten Nachteilen hinsichtlich der minimalen Größe der nachweisbaren Lecks behaftet.

Dieser Nachteil kann bei Verwendung des erfindungsgemäßen Verfahrens zur Durchführung eines Integritätstests überwunden werden, da eine derart kleine Permeationsrate, wie etwa von SF₆, einen sehr viel kleineren Prüffluidstrom verursacht und somit störende Einflüsse der Permeation auf das Messsignal deutlich geringer ausgeprägt sind als in herkömmlichen Verfahren oder gar ganz entfallen (siehe Fig. 4). Somit eignet sich das erfindunsgemäße Verfahren in besonders vorteilhafter und effizienter Weise für die Durchführung von Integritätstest für Beutel mit einem Volumen von mehreren Litern.

### Bezugszeichenliste

- 1: Testbehälter
- 2: Prüffluiddetektor
- 3: Prüffluidvorratsbehälter
- 4: Prüfbehälterpumpe
- 5: Prüfbehälter
- 6: Testbehälterpumpe
- 7: Prüffluidauffangbehälter
- 8: Prüffluidrecyclingpumpe
- 10: Testvorrichtung
- 12: Prüffluidversorgungseinheit

- L1: Testbehälterzuleitung
- L2: Prüfbehälterzuleitung
- L3: Prüfbehälterbelüftungsleitung

- F1: Testbehälterfilter
- F2: Prüfbehälterfilter

- V1: Detektorventil
- V2: Prüfbehälterevakuierungsventil
- V3: Prüffluidzufuhrventil
- V4: Testbehälterpumpventil
- V5: Prüfbehälterbelüftungsventil
- V6: Testbehälterbelüftungsventil
- V7: Prüffluidabfuhrventil

- ptest: Testdruck
- TestTime: Testzeit
- RejectLimit: Grenzwert (Dichtheit des Testbehälters)

## Patentansprüche

1. Verfahren zur Durchführung eines Integritätstests an einem zumindest ein flexibles Hüllenmaterial umfassenden Beutel (1) zur Bioprozessierung, wobei das Hüllenmaterial einen Kunststoff umfasst, umfassend die Schritte:
- Einfüllen eines Prüfgases in den Beutel (1); und
- Detektieren von unmittelbar außerhalb des Beutels (1) vorhandenem Prüfgas;
wobei das Prüfgas derart ausgebildet ist, dass die Permeationsrate des Prüfgases durch unversehrtes Hüllenmaterial des Beutels (1) nicht größer als 1·10⁻⁶ mbar·m/(s·bar) ist,
wobei das Fassungsvermögen des flexiblen Beutels (1) zumindest etwa 10 l beträgt, und
wobei das zumindest eine Hüllenmaterial eine Dicke von nicht mehr als 2 mm aufweist.

2. Verfahren nach Anspruch 1, wobei ein Druckunterschied von Prüfgas besteht, bei welchem ein Testdruck des Prüfgases im Beutel (1) größer ist als ein Umgebungsdruck unmittelbar außerhalb des Beutels (1).

3. Verfahren nach Anspruch 2, wobei der
Druckunterschied in einem Bereich von 10 mbar bis 1 bar, bevorzugt in einem Bereich von etwa 20 mbar bis etwa 0,5 bar, mehr bevorzugt in einem Bereich von etwa 30 mbar bis etwa 0,4 bar, am meisten bevorzugt in einem Bereich von etwa 50 mbar bis etwa 0,3 bar liegt.

4. Verfahren nach einem der vorhergehenden Ansprüche, wobei das Prüfgas einen oder mehrere der Stoffe Ne, Ar, Kr, Xe, Rn, CO₂ und SF₆ umfasst.

5. Verfahren nach einem der vorhergehenden Ansprüche, wobei das Detektieren des Prüfgases außerhalb des Beutels (1) zumindest teilweise in einem Zeitraum erfolgt, der mehr als 8 Sekunden weiter bevorzugt mehr als 12 Sekunden, noch weiter bevorzugt mehr als 20 Sekunden, am meisten bevorzugt mehr als 30 Sekunden nach dem Einfüllen des Prüfgases andauert.

6. Verfahren nach einem der vorhergehenden Ansprüche, wobei das zumindest eine Hüllenmaterial eine Dicke von bevorzugt nicht mehr als 1 mm, weiter bevorzugt nicht mehr als 500 µm, noch weiter bevorzugt nicht mehr als 400 µm, am meisten bevorzugt nicht mehr als 300 µm aufweist.

7. Verfahren nach einem der vorangegangenen Ansprüche, wobei das zumindest eine Hüllenmaterial einen oder mehrere Kunststoffe der Liste umfassend EVA, EVOH und PE umfasst.

8. Verfahren nach einem der vorhergehenden Ansprüche, wobei das Fassungsvermögen des flexiblen Beutels (1) bevorzugt zumindest etwa 25 l, am meisten bevorzugt zumindest etwa 50 l beträgt.

9. Verfahren nach einem der vorhergehenden Ansprüche, wobei das Detektieren des unmittelbar außerhalb des Beutels (1) vorhandenen Prüfgases mittels LASER-Absorption erfolgt.

10. Verwendung einer Testvorrichtung (10) mit
- einer Prüfgasquelle (3), aus der ein Prüfgas in einen Beutel (1) einfüllbar ist; und
- einem Prüffluiddetektor (2) zum Detektieren von Prüfgas unmittelbar außerhalb des Beutels (1);
zur Durchführung eines Integritätstests an einem flexiblen Beutel (1) gemäß dem Verfahren nach einem der Ansprüche 1 bis 9.

## Claims

1. A method for performing an integrity test on a bag (1) comprising at least one flexible casing material for bioprocessing, comprising the steps:
- pouring a test gas into the bag (1); and
- detecting test gas present directly outside of the bag (1) ;
wherein the test gas is configured such, that the permeation rate of the test gas through undamaged casing material of the bag (1) is not greater than 1·10⁻⁶ mbar·m/ (s·bar),
wherein the capacity of the flexible bag (1) is at least roughly 10 l, and
wherein the at least one casing material has a thickness of not more than 2 mm.

2. The method according to claim 1, wherein a pressure difference of test gas exists, in which the test gas in the bag (1) is greater than an ambient pressure directly outside of the bag (1).

3. The method according to claim 2, wherein the pressure difference lies in a range of 10 mbar to 1 bar, preferably in a range of about 20 mbar to about 0.5 bar, more preferably in a range of about 30 mbar to about 0.4 bar, most preferably in a range of about 50 mbar to about 0.3 bar.

4. The method according to any of the preceding claims, wherein the test gas comprises one or more of the substances Ne, Ar, Kr, Xe, Rn, CO₂ and SF₆.

5. The method according to any of the preceding claims, wherein the detection of the test gas outside of the bag (1) occurs at least partially in a time period which lasts more than 8 seconds, further preferably more than 12 seconds, even further preferably more than 20 seconds, most preferably more than 30 seconds after pouring the test gas.

6. The method according to any of the preceding claims, wherein the at least one casing material has a thickness of not more than 1 mm, further preferably not more than 500 µm, even further preferably not more than 400 µm, most preferably not more than 300 µm.

7. The method according to any of the preceding claims, wherein the at least one casing material comprises at least one or a plurality of plastics from the list comprising EVA, EVOH and PE.

8. The method according any of the preceding claims, wherein the capacity of the flexible bag (1) is preferably at least about 25 l, most preferably at least about 50 l.

9. The method according to any of the preceding claims, wherein the detection of the test gas directly outside of the bag (1) occurs by means of LASER absorption.

10. The use of a testing apparatus (10) having
- a test gas source (3), from which a test gas can be poured into a bag (1); and
- a test fluid detector (2) for detection of test gas directly outside of the bag (1);
for performing an integrity test on a flexible bag (1) according to the method according to any of claims 1 to 9.

## Revendications

1. Procédé pour mettre en œuvre un test d'intégrité sur un sachet (1) comprenant au moins un matériau d'enveloppe flexible aux fins de biotraitement, dans lequel le matériau d'enveloppe comprend une matière plastique, comprenant les étapes :
- de versement d'un gaz de contrôle dans le sachet (1) ; et
- de détection d'un gaz de contrôle présent directement à l'extérieur du sachet (1) ;
dans lequel le gaz de contrôle est réalisé de telle sorte que le taux de perméation du gaz de contrôle à travers le matériau d'enveloppe intact du sachet (1) n'est pas supérieur à 1·10⁻⁶ mbar·m/ (s·bar),
dans lequel la contenance du sachet (1) flexible atteint au moins environ 10 l, et
dans lequel le au moins un matériau d'enveloppe présente une épaisseur n'excédant pas 2 mm.

2. Procédé selon la revendication 1, dans lequel une différence de pression de gaz de contrôle existe, pour laquelle une pression de test du gaz de contrôle dans le sachet (1) est supérieure à une pression ambiante directement à l'extérieur du sachet (1).

3. Procédé selon la revendication 2, dans lequel la différence de pression se situe dans une plage de 10 mbar à 1 bar, de préférence dans une plage d'environ 20 mbar à environ 0,5 bar, plus préférentiellement dans une plage d'environ 30 mbar à environ 0,4 bar, idéalement dans une plage d'environ 50 mbar à environ 0,3 bar.

4. Procédé selon l'une quelconque des revendications précédentes, dans lequel le gaz de contrôle comprend une ou plusieurs des substances Ne, Ar, Kr, Xe, Rn, CO₂ et SF₆.

5. Procédé selon l'une quelconque des revendications précédentes, dans lequel la détection du gaz de contrôle s'effectue à l'extérieur du sachet (1) au moins en partie pendant un laps de temps qui dure plus de 8 secondes, plus préférentiellement plus de 12 secondes, plus préférentiellement encore plus de 20 secondes, idéalement plus de 30 secondes après le versement du gaz de contrôle.

6. Procédé selon l'une quelconque des revendications précédentes, dans lequel le au moins un matériau d'enveloppe présente une épaisseur de préférence n'excédant pas 1 mm, plus préférentiellement n'excédant pas 500 µm, plus préférentiellement encore n'excédant pas 400 µm, idéalement n'excédant pas 300 µm.

7. Procédé selon l'une quelconque des revendications précédentes, dans lequel le au moins un matériau d'enveloppe comprend une ou plusieurs matières plastiques de la liste comprenant EVA, EVOH et PE.

8. Procédé selon l'une quelconque des revendications précédentes, dans lequel la contenance du sachet (1) flexible atteint de préférence au moins environ 25 l, mieux encore au moins environ 50 l.

9. Procédé selon l'une quelconque des revendications précédentes, dans lequel la détection du gaz de contrôle présent directement à l'extérieur du sachet (1) s'effectue au moyen d'une absorption laser.

10. Utilisation d'un dispositif de test (10) avec
- une source de gaz de contrôle (3), à partir de laquelle un gaz de contrôle peut être versé dans un sachet (1) ; et
- un détecteur de fluide de contrôle (2) destiné à détecter un gaz de contrôle directement à l'extérieur du sachet (1) ;
pour la mise en œuvre d'un test d'intégrité sur un sachet (1) flexible selon le procédé selon l'une quelconque des revendications 1 à 9.
